# EUROPEAN PATENT APPLICATION

(11) **EP 2 906 016 A1**
(43) Date of publication of application: **12.08.2015**
(21) Application number: 12886947.6
(22) Date of filing: 26.10.2012
(51) Int. Cl.: H04W 80/00

(54) **REFERENCE SIGNAL TRANSMISSION METHOD AND DEVICE**

(71) Applicant: Huawei Technologies Co., Ltd., Longgang District Shenzhen, Guangdong 518129 (CN)
(72) Inventor: DAI, Xizeng, Shenzhen Guangdong 518129 (CN); FAN, Xiaoan, Shenzhen Guangdong 518129 (CN); CHENG, Xingqing, Shenzhen Guangdong 518129 (CN); WU, Zuomin, Shenzhen Guangdong 518129 (CN); YANG, Jianbing, Shenzhen Guangdong 518129 (CN)
(74) Representative: Epping - Hermann - Fischer
(86) International application number: PCT/CN2012/083592
(87) International publication number: WO 2014/063355

(57) **Abstract**

A method and an appratus for transmitting a reference signal is provided, and flexibly configuration of resource used for bearing the RS may be implemented. The method includes: selecting, by a first point device, a first frequency domain resource used for bearing a first reference signal RS from a first carrier, wherein the first carrier is used for data transmission and/or measurement between the first point device and a user equipment, and a number of a resource unit included in the first frequency domain resource is smaller than a system bandwidth of the first carrier; and transmitting the first RS to the user equipment through the first frequency domain resource. According to the method and the appratus for transmitting the reference signal in the embodiments of the present invention, after determinting the resource used for bearing the RS from the first carrier, the first point device transmits the RS to a user equipment through the determined resource, to make the position of the resource used for bearing the RS in the first carrier be not fixed, so that the cost of the resource used for bearing the RS may be reduced and the resource used for bearing the RS may be configured flexibly.

## Description

### TECHNICAL FIELD

The present invention relates to the field of communications, and particularly, to a method and an apparatus for transmitting a reference signal.

### BACKGROUND

In the existing communication systems, reference signals (RS, Reference Signal RS) may be divided into a UE-specific reference signal (DM-RS, UE-Specific Reference Signal), a channel-state information-reference signal (CSI-RS: Channel-State Information-Reference Signal) and a cell-specific reference signal (CRS, Cell-Specific Reference Signal) in terms of functions. At present, in some systems, synchronous tracking and radio resource management (RRM, Radio Resource Management) measurement may be performed based on the cell-specific reference signal (CRS, Cell-Specific Reference Signal). Therefore, the RS used for synchronous tracking and RRM measurement does not require the frequency domain to occupy a full bandwidth, nor require all sub-frames to be sent. Thus, resources used for bearing the RS (mainly CRS) may be decreased, in order to improve the spectrum efficiency. At present, a method for transmitting a reference signal is known, which may be used for reducing the resources used for bearing RS, namely, the frequency domain resources used for bearing the RS are not full bandwidth, but in the prior art, the frequency domain used for bearing the RS is fixed, therefore, for example, under the condition that the frequency spectrum configuration (including the same frequency domain used for bearing RS) of adjacent points are the same, interference is liable to generate to affect normal communication.

Therefore, it is desirable to reduce the cost of resources used for transmitting RS, while the resources used for bearing the RS may be flexibly configured to prevent the generation of interference.

### SUMMARY

Embodiments of the present invention provide a method and an apparatus for transmitting a reference signal, and flexibly configuration of a resource used for bearing the RS may be implemented.

In a first aspect, a method for transmitting a reference signal is provided, the method includes: selecting, by a first point device, a first frequency domain resource used for bearing a first reference signal RS from a first carrier, wherein the first carrier is used for data transmission and/or measurement between the first point device and a user equipment, and a number of a resource unit included in the first frequency domain resource is smaller than a system bandwidth of the first carrier; and transmitting the first RS to the user equipment through the first frequency domain resource.

In a first possible implementation manner, the first point device is a micro base station, an access point or a transmission point.

In combination with the first aspect and the first possible implementation manner, in a second possible implementation manner, the first carrier is a new carrier type NCT carrier or a carrier used for performing machine type communication MTC.

In combination with the first aspect, the first possible implementation manner and the second possible implementation manner, in a third possible implementation manner, the first point device is located in an idle cell.

In combination with the first aspect, the first possible implementation manner, the second possible implementation manner and the third possible implementation manner, in a fourth possible implementation manner, before the transmitting the first RS to the user equipment through the first frequency domain resource, the method further includes: sending frequency domain indication information used for indicating the first frequency domain resource, for enabling the user equipment to determine the first frequency domain resource from the first carrier according to the frequency domain indication information, in order to acquire the first RS.

In combination with the first aspect, the first possible implementation manner, the second possible implementation manner, the third possible implementation manner and the fourth possible implementation manner, in a fifth possible implementation manner, the sending frequency domain indication information used for indicating the first frequency domain resource, includes: sending the frequency domain indication information used for indicating the first frequency domain resource through a third carrier, wherein when the first carrier is an NCT carrier, the third carrier is a main component carrier; and when the first carrier is a carrier used for performing MTC, the third carrier is a carrier located in the same preset frequency bandwidth as the first carrier.

In combination with the first aspect, the first possible implementation manner, the second possible implementation manner, the third possible implementation manner, the fourth possible implementation manner and the fifth possible implementation manner, in a sixth possible implementation manner, the first point device cooperates with a second point to communicate with the user equipment, and the sending frequency domain indication information used for indicating the first frequency domain resource, includes: sending the frequency domain indication information to the second point device, for enabling the second point device to send the frequency domain indication information to the user equipment through a fourth carrier, wherein the first carrier is used for communication between the first point device and the user equipment, and the fourth carrier is used for communication between the second point device and the user equipment.

In combination with the first aspect, the first possible implementation manner, the second possible implementation manner, the third possible implementation manner, the fourth possible implementation manner, the fifth possible implementation manner and the sixth possible implementation manner, in a seventh possible implementation manner, the selecting, by a first point device, a first frequency domain resource used for bearing a first reference signal RS from a first carrier, includes: selecting, by the first point device, the first frequency domain resource from the first carrier according to a cell identifier of the first point device, wherein the cell identifier of the first point device is different from a cell identifier of a neighboring point device of the first point device.

In a second aspect, a method for transmitting a reference signal is provided, the method includes: determining a first frequency domain resource used for bearing a first reference signal RS from a first carrier, wherein the first frequency domain resource is selected by a first point device from the first carrier, the first carrier is used for data transmission and/or measurement between the first point device and a user equipment, and a number of a resource unit included in the first frequency domain resource is smaller than a system bandwidth of the first carrier; and acquiring the first RS according to the first frequency domain resource.

In a first possible implementation manner, the first point device is a micro base station, an access point or a transmission point.

In combination with the second aspect and the first possible implementation manner, in a second possible implementation manner, the first carrier is a new carrier type NCT carrier or a carrier used for performing machine type communication MTC.

In combination with the second aspect, the first possible implementation manner and the second possible implementation manner, in a third possible implementation manner, the first point device is located in an idle cell.

In combination with the second aspect, the first possible implementation manner, the second possible implementation manner and the third possible implementation manner, in a fourth possible implementation manner, the first frequency domain resource is selected by the first point device from the first carrier according to a cell identifier of the first point device, and the determining a first frequency domain resource used for bearing a first reference signal RS from a first carrier, includes: acquiring the cell identifier of the first point device; and determining the first frequency domain resource according to the cell identifier of the first point device.

In combination with the second aspect, the first possible implementation manner, the second possible implementation manner, the third possible implementation manner and the fourth possible implementation manner, in a fifth possible implementation manner, the determining a first frequency domain resource used for bearing a first reference signal RS from a first carrier, includes: receiving frequency domain indication information used for indicating the first frequency domain resource; and determining the first frequency domain resource according to the frequency domain indication information.

In combination with the second aspect, the first possible implementation manner, the second possible implementation manner, the third possible implementation manner, the fourth possible implementation manner and the fifth possible implementation manner, in a sixth possible implementation manner, the receiving frequency domain indication information used for indicating the first frequency domain resource includes: receiving the frequency domain indication information through a third carrier, wherein when the first carrier is an NCT carrier, the third carrier is a main component carrier; when the first carrier is a carrier used for performing MTC, the third carrier is a carrier located in the same preset frequency bandwidth as the first carrier.

In combination with the second aspect, the first possible implementation manner, the second possible implementation manner, the third possible implementation manner, the fourth possible implementation manner, the fifth possible implementation manner and the sixth possible implementation manner, in a seventh possible implementation manner, the first point device cooperates with a second point to communicate with the user equipment, and the receiving frequency domain indication information used for indicating the first frequency domain resource, includes: receiving the frequency domain indication information sent by the second point device through a fourth carrier, wherein the frequency domain indication information is acquired by the second point device from the first point device, the first carrier is used for communication between the first point device and the user equipment, and the fourth carrier is used for communication between the second point device and the user equipment.

In a third aspect, a method for transmitting a reference signal is provided, the method includes: when a user equipment performs data transmission and/or measurement through a fifth carrier and a sixth carrier, selecting, by a first point device, a first time domain resource used for bearing a third reference signal RS from the fifth carrier, wherein the fifth carrier is used for data transmission and/or measurement between the user equipment and the first point device, the sixth carrier is used for resource scheduling, the third RS is sent periodically, and the sending period of the third RS is at least two sub-frames; sending time domain indication information, wherein the time domain indication information is used for indicating offset of the first time domain resource relative to a second time domain resource of the sixth carrier and the sending period of the third RS; and transmitting the third RS to the user equipment through the first time domain resource.

In a first possible implementation manner, the fifth carrier is a new carrier type NCT carrier, and the sixth carrier is a main component carrier; or the fifth carrier is a carrier used for performing MTC, and the sixth carrier is a carrier located in the same preset frequency domain bandwidth as the fifth carrier.

In combination with the third aspect and the first possible implementation manner, in a second possible implementation manner, the fifth carrier is used for communication between the first point device and the user equipment, the sixth carrier is used for communication between a third point device and the user equipment, wherein the third point device cooperates with the first point to communicate with the user equipment.

In combination with the third aspect, the first possible implementation manner and the second possible implementation manner, in a third possible implementation manner, the sending time domain indication information, includes: sending the time domain indication information to a third point device, for enabling the third point device to send the time domain indication information to the user equipment through the sixth carrier.

In a fourth aspect, a method for transmitting a reference signal is provided, the method includes: when a user equipment performs data transmission and/or measurement through a fifth carrier and a sixth carrier, receiving time domain indication information, wherein the fifth carrier is used for data transmission and/or measurement between the user equipment and first point device, the sixth carrier is used for resource scheduling, the time domain indication information is used for indicating offset of a first time domain resource of the fifth carrier relative to a second time domain resource of the sixth carrier, the first time domain resource is used for bearing a third reference signal RS, the third RS is sent periodically, the sending period of the third RS is at least two sub-frames, and the time domain indication information is further used for indicating the sending period of the third RS; and determining the first time domain resource from the fifth carrier according to the time domain indication information, in order to acquire the third RS.

In a first possible implementation manner, the fifth carrier is a new carrier type NCT carrier, and the sixth carrier is a main component carrier; or the fifth carrier is a carrier used for performing MTC, and the sixth carrier is a carrier located in the same preset frequency domain bandwidth as the fifth carrier.

In combination with the fourth aspect and the first possible implementation manner, in a second possible implementation manner, the fifth carrier is used for communication between the first point device and the user equipment, the sixth carrier is used for communication between a third point device and the user equipment, wherein the third point device cooperates with the first point to communicate with the user equipment.

In combination with the fourth aspect, the first possible implementation manner and the second possible implementation manner, in a third possible implementation manner, the receiving time domain indication information, includes: receiving the time domain indication information sent by a third point device through the sixth carrier, wherein the time domain indication information is acquired by the third point device from the first point device.

In a fifth aspect, an appratus for transmitting a reference signal is provided, the appratus includes: a selecting unit, configured to enable a first point device to select a first frequency domain resource used for bearing a first reference signal RS from a first carrier, wherein the first carrier is used for data transmission and/or measurement between the first point device and a user equipment, and a number of a resource unit included in the first frequency domain resource is smaller than a system bandwidth of the first carrier; and a sending unit, configured to transmit the first RS to the user equipment through the first frequency domain resource selected by the selecting unit.

In a first possible implementation manner, the first point device is a micro base station, an access point or a transmission point.

In combination with the fifth aspect and the first possible implementation manner, in a second possible implementation manner, the first carrier is a new carrier type NCT carrier or a carrier used for performing machine type communication MTC.

In combination with the fifth aspect, the first possible implementation manner and the second possible implementation manner, in a third possible implementation manner, the first point device is located in an idle cell.

In combination with the fifth aspect, the first possible implementation manner, the second possible implementation manner and the third possible implementation manner, in a fourth possible implementation manner, the sending unit is further configured to send frequency domain indication information used for indicating the first frequency domain resource, for enabling the user equipment to determine the first frequency domain resource from the first carrier according to the frequency domain indication information, in order to acquire the first RS.

In combination with the fifth aspect, the first possible implementation manner, the second possible implementation manner, the third possible implementation manner and the fourth possible implementation manner, in a fifth possible implementation manner, the sending unit is specifically configured to send the frequency domain indication information used for indicating the first frequency domain resource through a third carrier, wherein when the first carrier is an NCT carrier, the third carrier is a main component carrier; when the first carrier is a carrier used for performing MTC, the third carrier is a carrier located in the same preset frequency bandwidth as the first carrier.

In combination with the fifth aspect, the first possible implementation manner, the second possible implementation manner, the third possible implementation manner, the fourth possible implementation manner and the fifth possible implementation manner, in a sixth possible implementation manner, the first point device cooperates with a second point to communicate with the user equipment, and the sending unit is specifically configured to send the frequency domain indication information to the second point device, for enabling the second point device to send the frequency domain indication information to the user equipment through a fourth carrier, wherein the first carrier is used for communication between the first point device and the user equipment, and the fourth carrier is used for communication between the second point device and the user equipment.

In combination with the fifth aspect, the first possible implementation manner, the second possible implementation manner, the third possible implementation manner, the fourth possible implementation manner, the fifth possible implementation manner and the sixth possible implementation manner, in a seventh possible implementation manner, if a cell identifier of the first point device is different from a cell identifier of a neighboring point device, the selecting unit is specifically configured to enable the first point device to select the first frequency domain resource from the first carrier according to the cell identifier of the first point device.

In a sixth aspect, an appratus for transmitting a reference signal is provided, the appratus includes: a determining unit, configured to determine a first frequency domain resource used for bearing a first reference signal RS from a first carrier, wherein the first frequency domain resource is selected by a first point device from the first carrier, the first carrier is used for data transmission and/or measurement between the first point device and a user equipment, and a number of a resource unit included in the first frequency domain resource is smaller than a system bandwidth of the first carrier; and an acquiring unit, configured to acquire the first RS according to the first frequency domain resource determined by the determining unit.

In a first possible implementation manner, the first point device is a micro base station, an access point or a transmission point.

In combination with the sixth aspect and the first possible implementation manner, in a second possible implementation manner, the first carrier is a new carrier type NCT carrier or a carrier used for performing machine type communication MTC.

In combination with the sixth aspect, the first possible implementation manner and the second possible implementation manner, in a third possible implementation manner, the first point device is located in an idle cell.

In combination with the sixth aspect, the first possible implementation manner, the second possible implementation manner and the third possible implementation manner, in a fourth possible implementation manner, the first frequency domain resource is selected by the first point device from the first carrier according to a cell identifier of the first point device, and the determining unit is specifically configured to acquire the cell identifier of the first point device, and determine the first frequency domain resource according to the cell identifier of the first point device.

In combination with the sixth aspect, the first possible implementation manner, the second possible implementation manner, the third possible implementation manner and the fourth possible implementation manner, in a fifth possible implementation manner, the apparatus further includes: a receiving unit, configured to receive frequency domain indication information used for indicating the first frequency domain resource; and the determining unit is specifically configured to determine the first frequency domain resource according to the frequency domain indication information.

In combination with the sixth aspect, the first possible implementation manner, the second possible implementation manner, the third possible implementation manner, the fourth possible implementation manner and the fifth possible implementation manner, in a sixth possible implementation manner, the receiving unit is specifically configured to receive the frequency domain indication information through a third carrier, wherein when the first carrier is an NCT carrier, the third carrier is a main component carrier; when the first carrier is a carrier used for performing MTC, the third carrier is a carrier located in the same preset frequency bandwidth as the first carrier.

In combination with the sixth aspect, the first possible implementation manner, the second possible implementation manner, the third possible implementation manner, the fourth possible implementation manner, the fifth possible implementation manner and the sixth possible implementation manner, in a seventh possible implementation manner, the first point device cooperates with a second point to communicate with the user equipment, and the receiving unit is specifically configured to receive the frequency domain indication information sent by the second point device through a fourth carrier, wherein the frequency domain indication information is acquired by the second point device from the first point device, the first carrier is used for communication between the first point device and the user equipment, and the fourth carrier is used for communication between the second point device and the user equipment.

In a seventh aspect, an appratus for transmitting a reference signal is provided, the appratus includes: a selecting unit configured to, when a user equipment performs data transmission and/or measurement through a fifth carrier and a sixth carrier, enable a first point device to select a first time domain resource used for bearing a third reference signal RS from the fifth carrier, wherein the fifth carrier is used for data transmission and/or measurement between the user equipment and the first point device, the sixth carrier is used for resource scheduling, the third RS is sent periodically, and the sending period of the third RS is at least two sub-frames; and a sending unit, configured to send time domain indication information, wherein the time domain indication information is used for indicating offset of the first time domain resource selected by the selecting unit relative to a second time domain resource of the sixth carrier and the sending period of the third RS, and transmit the third RS to the user equipment through the first time domain resource.

In a first possible implementation manner, the fifth carrier is a new carrier type NCT carrier, and the sixth carrier is a main component carrier; or the fifth carrier is a carrier used for performing MTC, and the sixth carrier is a carrier located in the same preset frequency domain bandwidth as the fifth carrier.

In combination with the seventh aspect and the first possible implementation manner, in a second possible implementation manner, the fifth carrier is used for communication between the first point device and the user equipment, the sixth carrier is used for communication between a third point device and the user equipment, wherein the third point device cooperates with the first point to communicate with the user equipment.

In combination with the seventh aspect, the first possible implementation manner and the second possible implementation manner, in a third possible implementation manner, the sending unit is specifically configured to send the time domain indication information to a third point device, for enabling the third point device to send the time domain indication information to the user equipment through the sixth carrier.

In an eighth aspect, an appratus for transmitting a reference signal is provided, the appratus includes: a receiving unit configured to, when a user equipment performs data transmission and/or measurement through a fifth carrier and a sixth carrier, receive time domain indication information, wherein the fifth carrier is used for data transmission and/or measurement between the user equipment and a first point device, the sixth carrier is used for resource scheduling, the time domain indication information is used for indicating offset of a first time domain resource of the fifth carrier relative to a second time domain resource of the sixth carrier, the first time domain resource is used for bearing a third reference signal RS, the third RS is sent periodically, the sending period of the third RS is at least two sub-frames, and the time domain indication information is further used for indicating the sending period of the third RS; and a determining unit, configured to determine the first time domain resource from the fifth carrier according to the time domain indication information, in order to acquire the third RS.

In a first possible implementation manner, the fifth carrier is a new carrier type NCT carrier, and the sixth carrier is a main component carrier; or the fifth carrier is a carrier used for performing MTC, and the sixth carrier is a carrier located in the same preset frequency domain bandwidth as the fifth carrier.

In combination with the eighth aspect and the first possible implementation manner, in a second possible implementation manner, the fifth carrier is used for communication between the first point device and the user equipment, the sixth carrier is used for communication between the third point device and the user equipment, wherein the third point device cooperates with the first point to communicate with the user equipment.

In combination with the eighth aspect, the first possible implementation manner and the second possible implementation manner, in a third possible implementation manner, the receiving unit is specifically configured to receive the time domain indication information sent by a third point device through the sixth carrier, wherein the time domain indication information is acquired by the third point device from the first point device.

According to the method and the appratus for transmitting a reference signal in the embodiment of the present invention, after selecting the resource used for bearing the RS from the first carrier, the first point device transmits the RS to the user equipment through the selected resource, to make the position of the resource used for bearing the RS in the first carrier be not fixed, so that the cost of the resource used for bearing the RS may be reduced and the resource used for bearing the RS may be configured flexibly.

### BRIEF DESCRIPTION OF DRAWINGS

To illustrate technical solutions in the embodiments of the present invention more clearly, a brief introduction on the accompanying drawings which are needed in the description of the embodiments is given below. Apparently, the accompanying drawings in the description below are merely some of the embodiments of the present invention, based on which other drawings may be obtained by those of ordinary skills in the art without any creative effort.
Fig. 1 is a schematic flow diagram of a method for transmitting a reference signal according to an embodiment of the present invention.
Fig. 2 is another schematic flow diagram of a method for transmitting a reference signal according to an embodiment of the present invention.
Fig. 3 is a schematic flow diagram of a method for transmitting a reference signal according to another embodiment of the present invention.
Fig. 4 is a schematic diagram of a time domain resource used for bearing a reference signal in an embodiment of the present invention.
Fig. 5 is a schematic flow diagram of a method for transmitting reference signal according to another embodiment of the present invention.
Fig. 6 is a schematic block diagram of an apparatus for transmitting reference signal according to an embodiment of the present invention.
Fig. 7 is another schematic block diagram of an apparatus for transmitting reference signal according to an embodiment of the present invention.
Fig. 8 is a schematic block diagram of an apparatus for transmitting reference signal according to another embodiment of the present invention.
Fig. 9 is a schematic block diagram of an apparatus for transmitting reference signal according to another embodiment of the present invention.

### DESCRIPTION OF EMBODIMENTS

A clear and complete description of technical solutions in the embodiments of the present invention will be given below, in combination with the accompanying drawings in the embodiments of the present invention. Apparently, the embodiments described below are merely a part, but not all, of the embodiments of the present invention. All of other embodiments, obtained by those of ordinary skills in the art based on the embodiments of the present invention without any creative effort, fall into the protection scope of the present invention.

The technical solutions of the present invention may be applied to various communication systems, for example: a global system of mobile communication (GSM, Global System of Mobile communication), a code division multiple access (CDMA, Code Division Multiple Access) system, wideband code division multiple access (WCDMA, Wideband Code Division Multiple Access), general packet radio service (GPRS, General Packet Radio Service), long term evolution (LTE, Long Term Evolution), long term evolution-advanced (LTE-A, Long Term Evolution-Advanced), machine type communications (MTC, Machine Type Communications) or the like.

A user equipment (UE, User Equipment), may also be called a mobile terminal (Mobile Terminal), a mobile user equipment and the like, may communicate with one or multiple core networks through a radio access network (e.g., RAN, Radio Access Network), the user equipment may be a mobile terminal, for example, a mobile telephone (or called a "cellular" telephone) and a computer having a mobile terminal, for example, may be a portable, pocket, hand-held, computer inbuilt or vehicle-mounted mobile device, and they exchange language and/or data with a radio access network. In the embodiments of the present invention, the user equipment may also be an MTC device.

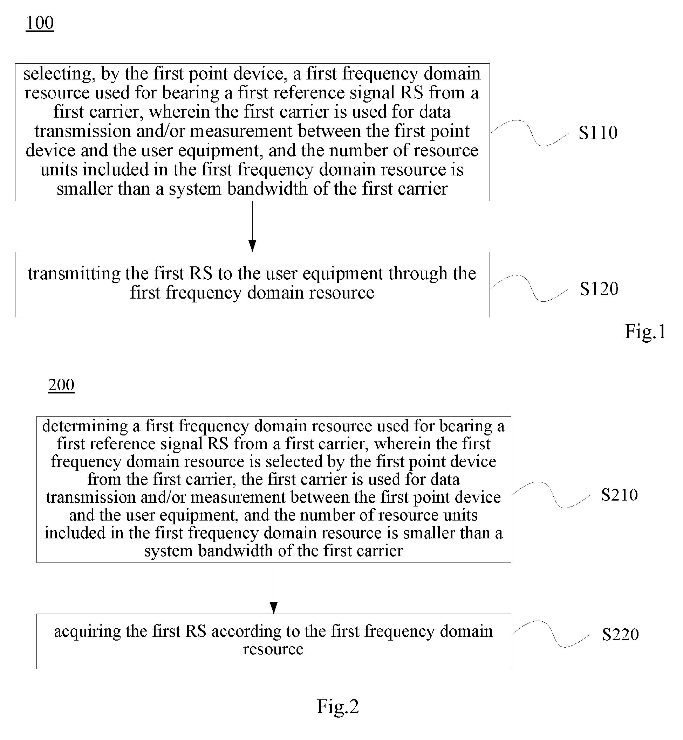

Fig. 1 shows a schematic flow diagram of a method for transmitting a reference signal 100 according to an embodiment of the present invention which described from the angle of a first point device, in the method 100, the first point device configures a frequency domain resource used for bearing RS and transmits a reference signal to a UE. As shown in Fig. 1, the method 100 includes:
S110, selecting, by the first point device, a first frequency domain resource used for bearing a first reference signal RS from a first carrier, wherein the first carrier is used for data transmission and/or measurement between the first point device and the user equipment, and a number of a resource unit included in the first frequency domain resource is smaller than a system bandwidth of the first carrier; and
S120, transmitting the first RS to the user equipment through the first frequency domain resource.

The method for transmitting a reference signal 100 in the embodiment of the present invention may be applicable to a variety of scenarios.

### Condition 1

Optionally, the first point device is a micro base station, an access point or a transmission point.

Specifically, for example, in a heterogeneous network (Het Net, Heterogeneous Network) technology, a multilayer multicarrier heterogeneous network enhancement technology or a coordinated multiple point transmission/reception (Coordinated Multiple Point transmission/reception, CoMP) technology, a micro base station (also called a pico base station) (Pico), an access point (AP, Access Point) or a transmission point (TP, Transmission Point) is mainly used for transmitting data to the UE, namely, the carrier used by the Pico, AP or TP is mainly used for transmitting data, a macro base station (Macro) is mainly used for performing scheduling and resource allocation for the UE, namely, such functions as scheduling and resource allocation and the like are finished by the carrier used by the macro base station, thus for the carrier used by the AP or TP, there is no need to keep the same pilot carrier cost (namely, the resource used for bearing the RS, and more specifically, the frequency domain resource herein) as the carrier used by the macro base station. Therefore, the method 100 according to the embodiment of the present invention may be applicable to conditions of transmitting the RS by using the carrier (an example of the first carrier) used by the Pico, AP or TP.

Under this condition, the first point device may be a Pico in the heterogeneous network technology, may be an AP in the multilayer multicarrier heterogeneous network enhancement technology, and may also be a TP in the coordinated multiple point transmission/reception technology.

The carrier used by the Pico, AP or TP may be taken as the first carrier.

The carrier having the same frequency as the first carrier and used by a neighboring first point device or a neighboring cell of the first point device may be taken as a second carrier (namely, a carrier may generate interference with the first carrier and will be illustrated in detail soon afterwards).

The carrier used by the macro base station may be taken as a third carrier (used for notifying the UE of the position of a frequency domain resource configured by the first point device and will be illustrated in detail soon afterwards).

### Condition 2

Optionally, the first carrier is a new carrier type NCT carrier.

Specifically, for example, in an LTE/LTE-A network, the new carrier type (NCT, New Carrier Type) is defined. The NCT carrier is mainly used for transmitting data, such functions as scheduling and resource allocation for the UE and the like are finished by a main component carrier (CC, Component Carrier), thus for a new carrier, there is no need to keep the same pilot carrier cost (namely, a resource used for bearing the RS, and more specifically, a frequency domain resource herein) as the main CC. Therefore, the method 100 according to the embodiment of the present invention may be applicable to conditions of transmitting the RS by using the NCT carrier (an example of the first carrier).

Under this condition, the first point device may be a base station device using the NCT carrier, and the base station device may be a base transceiver station (BTS, Base Transceiver Station) in GSM or CDMA, may be a base station (NodeB) in WCDMA, may be an evolutional base station (eNB or e-NodeB, evolutional Node B) in LTE, and may be the above-mentioned Pico, AP or TP.

The NCT carrier may be taken as the first carrier.

The carrier having the same frequency as the first carrier and used by a neighboring point device of the first point device may be taken as a second carrier (namely, a carrier may generate interference with the first carrier and will be illustrated in detail soon afterwards).

The main CC may be taken as a third carrier (used for notifying the UE of the position of a frequency domain resource configured by the first point device and will be illustrated in detail soon afterwards).

It should be noted that, in the embodiment of the present invention, when the first point device is the Pico, AP or TP, the main CC as the third carrier may be a carrier used by a macro point, may also be a carrier used by the first point device and this is not particularly limited in the present invention.

### Condition 3

The first carrier is a carrier used for performing machine type communication MTC.

Specifically, for an MTC device (an example of the user equipment), a bandwidth of the used carrier (transmitting data and reference signals) thereof is reduced. Therefore, the method 100 according to the embodiment of the present invention may be applicable to conditions of transmitting the RS by using the carrier (another example of the first carrier) used by the MTC device.

Under this condition, the first point device may be a base station device performing MTC communication with the MTC device, and the base station device may be a base transceiver station (BTS, Base Transceiver Station) in GSM or CDMA, may be a base station (NodeB) in WCDMA, and may be an evolutional base station (eNB or e-NodeB, evolutional Node B) in LTE.

The carrier used by the MTC device may be taken as the first carrier.

In the embodiment of the present invention, the first carrier used for performing MTC communication is a part in the preset frequency domain bandwidth, therefore, the carrier in the preset frequency domain bandwidth may be taken as a third carrier (used for notifying the UE of the position of the frequency domain resource configured by the first point device and will be illustrated in detail soon afterwards).

### Condition 4

The first point device is located in an idle cell.

Specially, under the condition that such serving cell with low load at night have service demand and a neighboring cell is idle, the neighboring cell (idle cell) has no service demand, and the idle cell (a point in the idle cell) only sends a CRS. Therefore, for the carrier used by the idle cell, there is no need to keep the same pilot carrier cost (namely, a resource used for bearing the RS, and more specifically, a frequency domain resource herein) as the serving cell. Therefore, the method 100 according to the embodiment of the present invention may be applicable to conditions of transmitting the RS by using the carrier (an example of the first carrier) used by the idle cell.

Under this condition, the first point device may be a base station device in the idle cell, and the base station device may be a base transceiver station (BTS, Base Transceiver Station) in GSM or CDMA, may be a base station (NodeB) in WCDMA and may be an evolutional base station (eNB or e-NodeB, evolutional Node B) in LTE.

The carrier used by the base station device in the idle cell may be taken as the first carrier.

The carrier having the same frequency as the first carrier and used by a neighboring point device or a neighboring cell of the first point device may be taken as a second carrier (namely, a carrier may generate interference with the first carrier and will be illustrated in detail soon afterwards).

It should be understood that, the scenarios (condition 1 to condition 4) listed above are merely exemplary illustration, the present invention is not limited hereto, other conditions capable of reducing the pilot carrier cost may be applicable to the method 100 according to the embodiment of the present invention and shall fall within the protection scope of the present invention, for example, under the condition that the first point device is a macro point device (called a first macro point device), and the first macro point device and other macro point devices (called a second macro point device) cooperatively serve the user equipment (for example, the first macro point device mainly transmits data for the user equipment and the second macro point device mainly transmits resource scheduling information for the user equipment), the carrier used for communication between the first point device and the user equipment may also be taken as the first carrier. Similarly, for example, under the condition that the first point device is a micro base station (called a first micro base station), and the first micro base station and other micro base stations (called a second micro base station) cooperatively serve the user equipment (for example, the first micro base station mainly transmits data for the user equipment and the second micro base station mainly transmits resource scheduling information for the user equipment), the carrier used for communication between the first micro base station and the user equipment may also be taken as the first carrier.

In S110, under the condition that the pilot carrier cost (the frequency domain resource used for bearing the RS (for example, CRS) in the first carrier) may be reduced, the first point device may firstly generate the RS (the occupied frequency domain resource is smaller than the system bandwidth), the method of generating the RS may be the same as that in the prior art, and will not be illustrated redundantly herein.

Thereafter, the first point device may determine the first frequency domain resource (composed of at least one resource unit) from the first carrier according to a generated RS sequence, the number of the resource units included in the first frequency domain resource is smaller than the system bandwidth of the first carrier, for example, the bandwidth is represented by a physical resource block (PRB), it is assumed that the system bandwidth is 50 PRB, the bandwidth of the first frequency domain resource may be 6 PRB, 15 PRB, 25 PRB or 50 PRB, and this is not particularly limited in the present invention. Moreover, the position of the first frequency domain resource in the frequency domain of the first carrier may be flexibly configured, for example, the first frequency domain resource may start from any RB, may also locate at the center of the system bandwidth of the first carrier, and is not particularly limited in the present invention.

Optionally, before the determining a first frequency domain resource used for bearing a first RS, the method further includes:
acquiring reference information, wherein the reference information is used for indicating resource configuration of a second carrier used for bearing a second RS, wherein the second carrier is a carrier used by a neighboring point device or a neighboring cell of the first point device; and
the selecting, by the first point device, a first frequency domain resource used for bearing a first reference signal RS from a first carrier, includes:
   selecting, by the first point device, the first frequency domain resource from the first carrier according to the reference information, for ensuring that resource configuration of the first carrier and the second carrier in the same sub-frame is different.

Specifically, when multiple point devices (for example, multiple Pico, AP or TP) exists in the system, as stated above, the carrier used by the implementation main body, namely the first point device, of the method for transmitting a signal 100 of the embodiment of the present invention is taken as the first carrier, the carrier used by other point devices is called the second carrier, when the cell of the implementation main body, namely the first point device, of the method for transmitting a signal 100 of the embodiment of the present invention has a neighboring cell (one or multiple), the carrier used by the first point device is taken as the first carrier, and the carrier used by the neighboring cell (a neighboring point device of the first point) is called the second carrier.

When the first carrier and the second carrier have the same frequency, and if the resource configuration of the first carrier is the same as that of the second carrier, namely, the same frequency domain configuration exists on the same sub-frame, the carriers may interfere with each other.

Therefore, in the embodiment of the present invention, the first point device may determine the first frequency domain resource according to the second carrier, namely, the RS resource configuration information of the carrier used by a neighboring point device or a neighboring cell of the first point device, for example, the configuration position in the system bandwidth of the first frequency domain resource may be different from that of a second frequency domain resource used for bearing the RS in the second carrier.

In addition, it should be noted that, if the first carrier is an NCT carrier, the second carrier may be another NCT carrier. If the first carrier is a carrier used by the Pico, AP or TP, the second carrier may be a carrier used by another Pico, AP or TP in the system. If the first carrier is a carrier used by the MTC device, the second carrier may be a carrier allocated by the first point device to another MTC device. If the first carrier is a carrier used by an idle cell, the second carrier may be a carrier used by a neighboring serving cell.

Optionally, in the embodiment of the present invention, if a cell identifier of the first point device is different from a cell identifier of a neighboring point device or a neighboring cell, the selecting, by the first point device, a first frequency domain resource used for bearing a first reference signal RS from a first carrier, includes:
selecting, by the first point device, the first frequency domain resource from the first carrier according to the cell identifier of the first point device.

Specifically, in the embodiment of the present invention, the first point device may determine a frequency domain resource having a mapping relationship with the cell identifier to bear the RS signal, according to the cell identifier thereof and by use of a preset algorithm or a mapping relationship, for example, modulus operation.

Moreover, if the cell identifiers of the first point devices in the system are different, namely, one cell identifier may only be used for uniquely indicating one first point device, since the cell identifiers of the first point devices in the system are different, the frequency domain resources used for bearing the RS in the carriers (the carriers used by the first point device, or the NCT carriers) in the system are different, thus the interference between the carriers may be avoided.

Optionally, the user equipment is an MTC device, and
the determining a first frequency domain resource used for bearing a first RS, includes:
determining the first frequency domain resource used for bearing the first reference signal RS according to a communication frequency band of the user equipment.

Specifically, in condition 4, for the MTC device, the communication frequency band of UE may not be located at the center of the system bandwidth, under this condition, the first point device may determine the configuration (including length, position or the like) of the first resource according to the configuration (including length, position or the like) of the communication frequency band of the UE.

It should be understood that, the method for determining the first frequency domain resource listed above are merely exemplary illustration, and the present invention is not limited hereto.

After determining the first frequency domain resource, in S120, the first point device may send the RS to the UE through the first carrier (specifically, the first frequency domain resource).

In the embodiment of the present invention, since the first point device may flexibly configure the first frequency domain resource, therefore, except the condition that the first point device selects the first frequency domain resource according to the cell identifier of the first point device, and the user equipment determines the first frequency domain resource according to the cell identifier of the first point device as well, the first point device needs to enable the UE to determine the first frequency domain resource from the first carrier by a pre-negotiation or a notification signaling.

Hereinafter, the method of the first point device for notifying the UE of the configuration position of the first frequency domain resource in the first carrier will be illustrated.

Before the transmitting the first RS to the user equipment through the first frequency domain resource, the method further includes:
sending frequency domain indication information used for indicating the first frequency domain resource, for enabling the user equipment to determine the first frequency domain resource from the first carrier according to the frequency domain indication information, in order to acquire the first RS.

Specifically, for example, the first point device may notify the UE of the length (including the number of the resource units) of the first frequency domain resource and the initial position in the first carrier. Therefore, the UE may determine the first frequency domain resource from the first carrier according to the length of the first frequency domain resource (including the number of the resource units) and the initial position in the first carrier, and acquire an RS signal from the first frequency domain resource.

Optionally, the first point device cooperates with a second point to communicate with the user equipment, and
the sending frequency domain indication information used for indicating the first frequency domain resource, includes:
   sending the frequency domain indication information to the second point device, for enabling the second point device to send the frequency domain indication information to the user equipment through a fourth carrier, wherein the first carrier is used for communication between the first point device and the user equipment, and the fourth carrier is used for communication between the second point device and the user equipment.

Specifically, for example, in condition 1, when the first point device is a Pico, AP or TP, the first point device may send the frequency domain indication information to a macro point (may also be called a macro base station), so that the macro point may notify the UE of the configuration (for example, the position and length of the first frequency domain resource in the first carrier) of the first frequency domain resource through the used carrier (an example of the fourth carrier, for example, a carrier used for resource scheduling and configuration for the UE) thereof.

Similarly, for example, under the condition that the first point device is a macro point device (called a first macro point device), and the first point device and another macro point device (called a second macro point device) cooperatively serve the user equipment (for example, the first macro point device mainly transmits data for the user equipment and the second macro point device mainly transmits resource scheduling information for the user equipment), the first carrier is used for communication between the first macro point device and the user equipment, and the fourth carrier is used for communication between the second macro point device and the user equipment, so that the first macro point device may send the frequency domain indication information to the second macro point device, and then the second macro point device may notify the UE of the configuration (for example, the position and length of the first frequency domain resource in the first carrier) of the first frequency domain resource through a used carrier (another example of the fourth carrier, for example, a carrier used for resource scheduling and configuration for the UE) thereof.

Similarly, for example, under the condition that the first point device is a micro base station (called a first micro base station), and the first micro base station and another micro base station (called a second micro base station) cooperatively serve the user equipment (for example, the first micro base station mainly transmits data for the user equipment and the second micro base station mainly transmits resource scheduling information for the user equipment), the first carrier is used for communication between the first micro base station and the user equipment, and the fourth carrier is used for communication between the second micro base station and the user equipment, so that the first micro base station may send the frequency domain indication information to the second micro base station, and then the second micro base station may notify the UE of the configuration (for example, the position and length of the first frequency domain resource in the first carrier) of the first frequency domain resource through a used carrier (another example of the fourth carrier, for example, a carrier used for performing resource scheduling and configuration on the UE) thereof. It should be noted that, the condition that the first point device is a micro base station is listed above, but the present invention is also applicable to the condition that the first point device is an access point (mainly used for transmitting data) or a transmission point (mainly used for transmitting data), under this condition, the second point device is corresponding to the first point device and is an access point (mainly used for scheduling resources) or a transmission point (mainly used for scheduling resources).

Optionally, the sending frequency domain indication information used for indicating the first frequency domain resource, includes:
sending the frequency domain indication information used for indicating the first frequency domain resource through a third carrier, wherein
when the first carrier is an NCT carrier, the third carrier is a main component carrier.

Specifically, in condition 2, namely, when the first carrier is the NCT carrier, the UE may be notified of the configuration (for example, the position and length of the first frequency domain resource in the first carrier) of the first frequency domain resource through the main CC carrier (as mentioned above, used for resource scheduling and configuration for the UE). Moreover, in the embodiment of the present invention, for example, the frequency domain indication information may be transmitted through a physical downlink control channel (PDCCH, Physical Downlink Control Channel).

Optionally, the sending frequency domain indication information used for indicating the first frequency domain resource, includes:
sending the frequency domain indication information used for indicating the first frequency domain resource through a third carrier, wherein
when the first carrier is a carrier used for performing MTC, the third carrier is a carrier located in the same preset frequency domain bandwidth as the first carrier.

Specifically, in condition 3, namely, when the first carrier is the carrier used for performing MTC communication, for the MTC device (an example of the user equipment), the bandwidth of the used carrier (transmitting data and reference signals) thereof is reduced, so that a part of frequency bands may be selected from the preset frequency domain bandwidth to serve as the first carrier, accordingly, a carrier (an example of the third carrier) located in the same preset frequency domain bandwidth as the first carrier may be used for notifying the UE of the configuration (for example, the position and length of the first frequency domain resource in the first carrier) of the first frequency domain resource. For example, the frequency domain indication information may be transmitted through a PDCCH. It should be noted that, the frequency domain configuration of the third carrier may be different from the frequency domain configuration of the first carrier and may also be the same as the frequency domain configuration of the first carrier, but under the condition that the frequency domain configuration of the third carrier may be the same as the frequency domain configuration of the first carrier, the time domain positions of the third carrier and the first carrier are different.

According to the embodiment of the present invention, by bearing the frequency domain indication information through the carrier existing in the system, communication resources may be saved.

It should be noted that, the third carrier and the fourth carrier listed above may be different carriers or identical carriers, for example, in condition 1, namely, when the first point device is the Pico, AP or TP, and if the first carrier is the NCT carrier, the third carrier and the fourth carrier may be a main CC used by a macro point.

Optionally, the sending frequency domain indication information used for indicating the first frequency domain resource, includes:
sending the frequency domain indication information to the user equipment through a reserved resource in a synchronous channel.

Specifically, in the synchronous channel, a synchronous signal only occupies 62 subcarriers among 72 subcarriers, and 10 resource units are reserved resources, thus the 10 reserved resource units may be used for notifying the UE of the configuration of the first frequency domain resource. In the embodiment of the present invention, on the 10 reserved resource units, for example, by using Walsh (Walsh) sequence modulation and by using a Walsh sequence with the length of 8, 3 bits may be transmitted on a primary synchronization sequence (PSS, primary synchronization sequence), and 3 bits may be transmitted on a secondary synchronization sequence (SSS, secondary synchronization sequence), so that no pilot carrier demodulation is needed. In addition, it should be noted that, the synchronous channel may be a synchronous channel in the above-mentioned first carrier, may also be a synchronous channel in the above-mentioned third carrier, may also be another synchronous channel for transmitting carriers between the first point device and the UE, and this is not particularly limited in the present invention.

According to the embodiment of the present invention, by bearing the frequency domain indication information through the reserved resources in the synchronous channel, no new signaling is needed to add, so that the communication resources may be saved.

Optionally, the sending frequency domain indication information used for indicating the first frequency domain resource, includes:
sending the frequency domain indication information to the user equipment through a radio resource control RRC signaling.

Specifically, in the embodiment of the present invention, the first point device may also notify the UE of the configuration of the first frequency domain resource through a radio resource control (RRC, Radio Resource Control) signaling.

It should be understood that, the manners of notifying the UE of the configuration of the first frequency domain resource listed above are merely exemplary illustration, the present invention is not limited hereto, for example, if the first point device determines the first frequency domain resource according to the cell identifier thereof, the UE may acquire the cell identifier of the first point device, and determine the frequency domain resource having a mapping relationship with the cell identifier from the first carrier, and take it as the first frequency domain resource, according to the cell identifier and by use of a preset algorithm or a mapping relationship (the same as the mapping relationship which is used when the first point device determines the first frequency domain resource).

In addition, it should be noted that, when multiple first carriers or multiple first carriers and second carriers exist in the system, specifically, when multiple NCT carriers, multiple MTC devices or multiple first point devices (for example, Pico, TP or AP) exist, the RS signals carried by the first carriers may be generated according to the same root sequence and different cyclic shifts, may also be generated according to different root sequences, and this is not particularly limited in the present invention.

Namely, optionally, in the embodiment of the present invention, the first RS is generated according to a first root sequence and the second RS is generated according to a second root sequence; or,
the first RS is generated according to a third root sequence and a first cyclic shift, and the second RS is generated according to the third root sequence and a second cyclic shift.

It should be understood that, the first carrier and the second carrier illustrated above may be intra-frequency carriers or inter-frequency carriers, and this is not particularly limited in the present invention. Moreover, the second carrier may be one carrier, may also be multiple carriers, and this is not particularly limited in the present invention. Moreover, the above-mentioned first root sequence and the third root sequence may be identical or different, the above-mentioned second root sequence and the third root sequence may be identical or different, and this is not particularly limited in the present invention.

According to the method for transmitting a reference signal in the embodiment of the present invention, after selecting the resource used for bearing the RS from the first carrier, the first point device transmits the RS to the user equipment through the selected resource, to make the position of the resource used for bearing the RS in the first carrier be not fixed, so that the cost of the resource used for bearing the RS may be reduced and the resource used for bearing the RS may be configured flexibly.

Moreover, the first point device may determine the first frequency domain resource according to the second carrier, namely the RS resource configuration information of the carrier used by a neighboring point device or a neighboring cell of the first point device, for example, the configuration position of the first frequency domain resource may be different from that of a second frequency domain resource used for bearing the RS in the second carrier in the system bandwidth, so that the inter-frequency interference between the carriers in the system may be reduced.

In addition, the first point device may notify the user equipment of the configuration of the frequency domain resource used for bearing the RS in the first carrier, in the format of signaling by use of the carrier existing in the system. Therefore, the resource configuration may be saved, and the practicability and the resource utilization rate are improved.

In MTC communication (corresponding to condition 3), for the MTC device, the condition that the communication frequency band of the UE may not be located at the center of the system bandwidth may exist. According to the prior art, it is regulated that the pilot carrier may only be located at the center of the system bandwidth, under this condition, the UE could not acquire the reference signal, thus failing to perform synchronous tracking. In contrast, according to the method for transmitting a reference signal in the present invention, by enabling the first point device (TP) to flexibly configure CRS, the frequency domain resource used for bearing the reference signal may be determined according to the communication frequency band of the UE, so that the UE may be ensured to acquire the reference signal, in order to perform the synchronous tracking.

Under the condition that such serving cell with low load at night have service demand and a neighboring cell is idle (corresponding to the condition 4), the neighboring cell (idle cell) has no service demand, and the idle cell (a point in the idle cell) only sends a CRS. When the serving cell performs CSI measurement, since the CRS configured by the neighboring cell do not collide, the signal-to-noise ratio (SNR, Signal-to-Noise Ratio) measured by the UE at the center of the cell will be very high, so that a very high modulation and coding scheme (MCS, Modulation and Coding Scheme) is determined. But when data are actually transmitted, the interference of high code rate (for example, 64 QAM) to the low-power pilot carrier is still sensitive. The CRS pilot carriers occurring together will induce certain performance loss. Therefore, fixed CRS configuration will cause fixed interference which is difficult to be solved by an inter-cell interference coordination (ICIC, Inter-Cell Interference Coordination) technology, and the influence of the interference under the condition of high code rate is quite severe. In contrast, according to the method for transmitting a reference signal in the present invention, by enabling the neighboring idle cell (a point in the idle cell) to flexibly configure the CRS, the fixed interference is reduced beneficially.

Fig. 2 shows a schematic flow diagram of a method for transmitting a reference signal 200 according to an embodiment of the present invention and described from the angle of a user equipment. In the method 200, the UE determines a frequency domain resource used for bearing a RS configured by a first point device, and acquires a reference signal from the frequency domain resource. As shown in Fig. 2, the method 200 includes:
S210, determining a first frequency domain resource used for bearing a first reference signal RS from a first carrier, wherein the first frequency domain resource is selected by the first point device from the first carrier, the first carrier is used for data transmission and/or measurement between the first point device and the user equipment, and the number of resource units included in the first frequency domain resource is smaller than a system bandwidth of the first carrier; and
S220, acquiring the first RS according to the first frequency domain resource.

Moreover, the first carrier is any one of the following carriers: a carrier used by an access point or a transmission point, a carrier used by an idle cell, a new carrier type NCT carrier or a carrier used for performing MTC.

The method for transmitting a reference signal 100 in the embodiment of the present invention may be applicable to a variety of scenarios.

### Condition 5

Optionally, the first point device is a micro base station, an access point or a transmission point.

Specifically, for example, in a heterogeneous network technology, a multilayer multicarrier heterogeneous network enhancement technology or a coordinated multiple point transmission/reception technology, a micro base station (also called a pico base station) (Pico), an access point (AP, Access Point) or a transmission point (TP, Transmission Point) is mainly used for transmitting data to the UE, namely, the carrier used by the Pico, AP or TP is mainly used for transmitting data, a macro base station (Macro) is mainly used for performing scheduling and resource allocation for the UE, namely, such functions as scheduling and resource allocation and the like are finished by the carrier used by the macro base station, thus for the carrier used by the AP or TP, there is no need to keep the same pilot carrier cost (namely, the resource used for bearing the RS, and more specifically, the frequency domain resource herein) as the carrier used by the macro base station. Therefore, the method 200 according to the embodiment of the present invention may be applicable to conditions of transmitting the RS by using the carrier (an example of the first carrier) used by the Pico, AP or TP.

Under this condition, the first point device may be a Pico in the heterogeneous network technology, may be an AP in the multilayer multicarrier heterogeneous network enhancement technology, and may also be a TP in the coordinated multiple point transmission/reception technology.

The carrier used by the Pico, AP or TP may be taken as the first carrier.

The carrier used by the macro base station may be taken as a third carrier (used for notifying the UE of the position of a frequency domain resource configured by the first point device and will be illustrated in detail soon afterwards).

### Condition 6

Optionally, the first carrier is a new carrier type NCT carrier.

Specifically, for example, in an LTE/LTE-A network, the new carrier type (NCT, New Carrier Type) is defined. The NCT carrier is mainly used for transmitting data, such functions as scheduling and resource allocation for the UE and the like are finished by a main component carrier (CC, Component Carrier), thus for a new carrier, there is no need to keep the same pilot carrier cost (namely, a resource used for bearing the RS, and more specifically, a frequency domain resource herein) as the main CC. Therefore, the method 200 according to the embodiment of the present invention may be applicable to conditions of transmitting the RS by using the NCT carrier (an example of the first carrier).

Under this condition, the first point device may be base station device using the NCT carrier, and the base station device may be a base transceiver station (BTS, Base Transceiver Station) in GSM or CDMA, may be a base station (NodeB) in WCDMA, may be an evolutional base station (eNB or e-NodeB, evolutional Node B) in LTE, and may be the above-mentioned Pico, AP or TP.

The NCT carrier may be taken as the first carrier.

The main CC may be taken as a third carrier (used for notifying the UE of the position of a frequency domain resource configured by the first point device and will be illustrated in detail soon afterwards).

It should be noted that, in the embodiment of the present invention, when the first point device is the Pico, AP or TP, the main CC as the third carrier may be a carrier used by a macro point, may also be a carrier used by the first point device and this is not particularly limited in the present invention.

### Condition 7

The first carrier is a carrier used for performing machine type communication MTC.

Specifically, for an MTC device (an example of the user equipment), a bandwidth of the used carrier (transmitting data and reference signals) thereof is reduced. Therefore, the method 200 according to the embodiment of the present invention may be applicable to conditions of transmitting the RS by using the carrier (another example of the first carrier) used by the MTC device.

Under this condition, the first point device may be base station device performing MTC communication with the MTC device, and the base station device may be a base transceiver station (BTS, Base Transceiver Station) in GSM or CDMA, may be a base station (NodeB) in WCDMA, and may be an evolutional base station (eNB or e-NodeB, evolutional Node B) in LTE.

The carrier used by the MTC device may be taken as the first carrier.

In the embodiment of the present invention, the first carrier used for performing MTC communication is a part in the preset frequency bandwidth, therefore, the carrier in the preset frequency bandwidth may be taken as a third carrier (used for notifying the UE of the position of the frequency domain resource configured by the first point device and will be illustrated in detail soon afterwards).

### Condition 8

The first point device is located in an idle cell.

Specially, under the condition that such serving cell with low load at night have service demand and a neighboring cell is idle, the neighboring cell (idle cell) has no service demand, and the idle cell (a point in the idle cell) only sends a CRS. Therefore, for the carrier used by the idle cell, there is no need to keep the same pilot carrier cost (namely, a resource used for bearing the RS, and more specifically, a frequency domain resource herein) as the serving cell. Therefore, the method 200 according to the embodiment of the present invention may be applicable to conditions of transmitting the RS by using the carrier (an example of the first carrier) used by the idle cell.

Under this condition, the first point device may be a base station device in the idle cell, and the base station device may be a base transceiver station (BTS, Base Transceiver Station) in GSM or CDMA, may be a base station (NodeB) in WCDMA and may be an evolutional base station (eNB or e-NodeB, evolutional Node B) in LTE.

The carrier used by the base station device in the idle cell may be taken as the first carrier.

It should be understood that, the scenarios (condition 7 to condition 8) listed above are merely exemplary illustration, the present invention is not limited hereto, other conditions capable of reducing the pilot carrier cost may be applicable to the method 100 according to the embodiment of the present invention and shall fall within the protection scope of the present invention, for example, under the condition that the first point device is a macro point device (called a first macro point device), and the first macro point device and other macro point devices (called a second macro point device) cooperatively serve the user equipment (for example, the first macro point device mainly transmits data for the user equipment and the second macro point device mainly transmits resource scheduling information for the user equipment), the carrier used for communication between the first point device and the user equipment may also be taken as the first carrier. Similarly, for example, under the condition that the first point device is a micro base station (called a first micro base station), and the first micro base station and other micro base stations (called a second micro base station) cooperatively serve the user equipment (for example, the first micro base station mainly transmits data for the user equipment and the second micro base station mainly transmits resource scheduling information for the user equipment), the carrier used for communication between the first micro base station and the user equipment may also be taken as the first carrier.

Under the condition that the pilot carrier cost (the frequency domain resource used for bearing the RS (for example, CRS) in the first carrier) may be reduced, the first point device may firstly generate the RS (the occupied frequency domain resource is smaller than the system bandwidth), the method of generating the RS may be the same as that in the prior art, and will not be illustrated redundantly herein.

Thereafter, the first point device may determine the first frequency domain resource (composed of at least one resource unit) from the first carrier according to a generated RS sequence, the number of the resource units included in the first frequency domain resource is smaller than the system bandwidth of the first carrier, for example, the bandwidth is represented by a physical resource block (PRB), it is assumed that the system bandwidth is 50 PRB, the bandwidth of the first frequency domain resource may be 6 PRB, 15 PRB, 25 PRB or 50 PRB, and this is not particularly limited in the present invention. Moreover, the position of the first frequency domain resource in the frequency domain of the first carrier may be flexibly configured, for example, the first frequency domain resource may start from any RB, may also locate at the center of the system bandwidth of the first carrier, and is not particularly limited in the present invention.

In the embodiment of the present invention, when multiple point device (for example, multiple Pico, AP or TP) exists in the system, as stated above, the carrier used by the implementation main body, namely the first point device of the method for transmitting a signal 100 of the embodiment of the present invention is taken as the first carrier, the carrier used by other point devices is called the second carrier, when the cell of the implementation main body, namely the first point device of the method for transmitting a signal 100 of the embodiment of the present invention has a neighboring cell (one or multiple), the carrier used by the first point device is taken as the first carrier, and the carrier used by the neighboring cell (a neighboring point device of the first point) is called the second carrier.

When the first carrier and the second carrier have the same frequency, and if the resource configuration of the first carrier is the same as that of the second carrier, namely, the same frequency domain configuration exists on the same sub-frame, the carriers may interfere with each other.

Therefore, in the embodiment of the present invention, the first point device may determine the first frequency domain resource according to the second carrier, namely, the RS resource configuration information of the carrier used by a neighboring point device or a neighboring cell of the first point device, for example, the configuration position in the system bandwidth of the first frequency domain resource may be different from that of a second frequency domain resource used for bearing the RS in the second carrier.

In addition, it should be noted that, if the first carrier is an NCT carrier, the second carrier may be another NCT carrier. If the first carrier is a carrier used by the Pico, AP or TP, the second carrier may be a carrier used by another Pico, AP or TP in the system. If the first carrier is a carrier used by the MTC device, the second carrier may be a carrier allocated by the first point device to another MTC device. If the first carrier is a carrier used by an idle cell, the second carrier may be a carrier used by a neighboring serving cell.

After determining the first frequency domain resource, the first point device may send the RS to the UE through the first carrier (specifically, the first frequency domain resource).

Accordingly, in S210, the UE may determine the first frequency domain resource from the first carrier.

Optionally, the first frequency domain resource is selected by the first point device from the first carrier according to a cell identifier of the first point device, and
the determining the first frequency domain resource used for bearing the first RS in the first carrier, includes:
acquiring the cell identifier of the first point device; and
determining the first frequency domain resource according to the cell identifier of the first point device.

Specifically, in the embodiment of the present invention, the first point device may determine a frequency domain resource having a mapping relationship with the cell identifier to bear the RS signal, according to the cell identifier thereof and by use of a preset algorithm or a mapping relationship, for example, modulus operation.

Moreover, if the cell identifiers of the first point devices in the system are different, namely, one cell identifier may only be used for uniquely indicating one first point device, since the cell identifiers of the first point device in the system are different, the frequency domain resources used for bearing the RS in the carriers (the carriers used by the first point device, or the NCT carriers) in the system are different, thus the interference between the carriers may be avoided.

Accordingly, the UE may determine a frequency domain resource having a mapping relationship with the cell identifier to serve as the first frequency domain resource, according to the cell identifier of the first point device and by use of a preset algorithm or a mapping relationship, for example, modulus operation, thus in S220, the UE may acquire the first RS from the first frequency domain resource. In the embodiment of the present invention, the UE may perform synchronous tracking of time domain and frequency domain according to the first RS.

Here, it should be noted that, the method of the UE for determining the first frequency domain resource according to the cell identifier of the first point device is the same as or corresponding to the method of the first point device for determining the first frequency domain resource according to the cell identifier of the first point device, namely, in a communication system of the embodiment of the present invention, for the same cell identifier, the corresponding frequency domain resource is unique, in other words, the frequency domain resources determined by the UE and by the first point device according to the same cell identifier are the same.

In the embodiment of the present invention, since the first point device may flexibly configure the first frequency domain resource, therefore, except the condition that the first point device selects the first frequency domain resource according to the cell identifier of the first point device, and the user equipment determines the first frequency domain resource according to the cell identifier of the first point device as well, the first point device needs to enable the UE to determine the first frequency domain resource from the first carrier by a pre-negotiation or a notification signaling.

Hereinafter, the method of the first point device for notifying the UE of the configuration position of the first frequency domain resource in the first carrier will be illustrated.

The determining the first frequency domain resource used for bearing the first RS in the first carrier, includes:
receiving frequency domain indication information used for indicating the first frequency domain resource; and
determining the first frequency domain resource according to the frequency domain indication information.

Specifically, for example, the first point device may notify the UE of the length (including the number of the resource units) of the first frequency domain resource and the initial position in the first carrier. Therefore, the UE may determine the first frequency domain resource from the first carrier according to the length of the first frequency domain resource (including the number of the resource units) and the initial position in the first carrier, and acquire an RS signal from the first frequency domain resource.

Optionally, the first point device cooperates with a second point to communicate with the user equipment, and
the receiving frequency domain indication information used for indicating the first frequency domain resource includes:
receiving the frequency domain indication information sent by the second point device through a fourth carrier, wherein the frequency domain indication information is acquired by the second point device from the first point device, the first carrier is used for communication between the first point device and the user equipment, and the fourth carrier is used for communication between the second point device and the user equipment.

Specifically, in condition 5, when the first point device is a Pico, AP or TP, the first point device may send the frequency domain indication information to a macro point (may also be called a macro base station), so that the macro point may notify the UE of the configuration (for example, the position and length of the first frequency domain resource in the first carrier) of the first frequency domain resource through the used carrier (for example, a carrier used for resource scheduling and configuration for the UE) thereof.

Similarly, for example, under the condition that the first point device is a macro point device (called a first macro point device), and the first point device and another macro point device (called a second macro point device) cooperatively serve the user equipment (for example, the first macro point device mainly transmits data for the user equipment and the second macro point device mainly transmits resource scheduling information for the user equipment), the first carrier is used for communication between the first macro point device and the user equipment, and the fourth carrier is used for communication between the second macro point device and the user equipment, so that the first macro point device may send the frequency domain indication information to the second macro point device, and then the second macro point device may notify the UE of the configuration (for example, the position and length of the first frequency domain resource in the first carrier) of the first frequency domain resource through a used carrier (another example of the fourth carrier, for example, a carrier used for resource scheduling and configuration for the UE) thereof.

Similarly, for example, under the condition that the first point device is a micro base station (called a first micro base station), and the first micro base station and another micro base station (called a second micro base station) cooperatively serve the user equipment (for example, the first micro base station mainly transmits data for the user equipment and the second micro base station mainly transmits resource scheduling information for the user equipment), the first carrier is used for communication between the first micro base station and the user equipment, and the fourth carrier is used for communication between the second micro base station and the user equipment, so that the first micro base station may send the frequency domain indication information to the second micro base station, and then the second micro base station may notify the UE of the configuration (for example, the position and length of the first frequency domain resource in the first carrier) of the first frequency domain resource through a used carrier (another example of the fourth carrier, for example, a carrier used for performing resource scheduling and configuration on the UE) thereof. It should be noted that, the condition that the first point device is a micro base station is listed above, but the present invention is also applicable to the condition that the first point device is an access point (mainly used for transmitting data) or a transmission point (mainly used for transmitting data), under this condition, the second point device is corresponding to the first point device and is an access point (mainly used for scheduling resources) or a transmission point (mainly used for scheduling resources).

Optionally, the receiving frequency domain indication information used for indicating the first frequency domain resource, includes:
receiving the frequency domain indication information through a third carrier, wherein:
   when the first carrier is an NCT carrier, the third carrier is a main component carrier.

Specifically, in condition 6, namely, when the first carrier is the NCT carrier, the UE may be notified of the configuration (for example, the position and length of the first frequency domain resource in the first carrier) of the first frequency domain resource through the main CC carrier (as mentioned above, used for resource scheduling and configuration for the UE). Moreover, in the embodiment of the present invention, for example, the frequency domain indication information may be transmitted through a PDCCH.

Optionally, the receiving frequency domain indication information used for indicating the first frequency domain resource, includes:
receiving the frequency domain indication information through a third carrier, wherein:
   when the first carrier is s carrier used for performing MTC, the third carrier is a carrier located in the same preset frequency domain bandwidth as the first carrier.

Specifically, in condition 7, namely, when the first carrier is the carrier used for performing MTC communication, a carrier in the same preset frequency domain bandwidth as the first carrier may be used for notifying the UE of the configuration (for example, the position and length of the first frequency domain resource in the first carrier) of the first frequency domain resource. For example, the frequency domain indication information may be transmitted through a PDCCH.

According to the embodiment of the present invention, by bearing the frequency domain indication information through the carrier existing in the system, communication resources may be saved.

It should be noted that, the third carrier and the fourth carrier listed above may be different carriers or identical carriers, for example, in condition 1, namely, when the first point device is the Pico, AP or TP, and if the first carrier is the NCT carrier, the third carrier and the fourth carrier may be a main CC used by a macro point.

Optionally, the receiving frequency domain indication information used for indicating the first frequency domain resource, includes:
receiving the frequency domain indication information sent by the first point device through a reserved resource in a synchronous channel.

Specifically, in the synchronous channel, a synchronous signal only occupies 62 subcarriers among 72 subcarriers, and 10 resource units are reserved resources, thus the 10 reserved resource units may be used for notifying the UE of the configuration of the first frequency domain resource. In the embodiment of the present invention, on the 10 reserved resource units, for example, by using Walsh (Walsh) sequence modulation and by using a Walsh sequence with the length of 8, 3 bits may be transmitted on a primary synchronization sequence (PSS, primary synchronization sequence), and 3 bits may be transmitted on a secondary synchronization sequence (SSS, secondary synchronization sequence), so that no pilot carrier demodulation is needed. In addition, it should be noted that, the synchronous channel may be a synchronous channel in the above-mentioned first carrier, may also be a synchronous channel in the above-mentioned third carrier, may also be another synchronous channel for transmitting carriers between the first point device and the UE, and this is not particularly limited in the present invention.

According to the embodiment of the present invention, by bearing the frequency domain indication information through the reserved resources in the synchronous channel, no new signaling is needed to add, so that the communication resources may be saved.

Optionally, the sending frequency domain indication information used for indicating the first frequency domain resource, includes:
receiving the frequency domain indication information sent by the first point device through a radio resource control RRC signaling.

Specifically, in the embodiment of the present invention, the first point device may also notify the UE of the configuration of the first frequency domain resource through a radio resource control (RRC, Radio Resource Control) signaling.

It should be understood that, the manners of notifying the UE of the configuration of the first frequency domain resource listed above are merely exemplary illustration, the present invention is not limited hereto, for example, if the first point device determines the first frequency domain resource according to the cell identifier thereof, the UE may acquire the cell identifier of the first point device, and determine the frequency domain resource having a mapping relationship with the cell identifier from the first carrier, and take it as the first frequency domain resource, according to the cell identifier and by use of a preset algorithm or a mapping relationship (the same as the mapping relationship which is used when the first point device determines the first frequency domain resource).

In addition, it should be noted that, when multiple first carriers or multiple first carriers and second carriers exist in the system, specifically, when multiple NCT carriers, multiple MTC devices or multiple first point devices (for example, Pico, TP or AP) exist, the RS signals carried by the first carriers may be generated according to the same root sequence and different cyclic shifts, may also be generated according to different root sequences, and this is not particularly limited in the present invention.

It should be understood that, the first carrier and the second carrier illustrated above may be intra-frequency carriers or inter-frequency carriers, and this is not particularly limited in the present invention. Moreover, the second carrier may be one carrier, may also be multiple carriers, and this is not particularly limited in the present invention. Moreover, the above-mentioned first root sequence and the third root sequence may be identical or different, the above-mentioned second root sequence and the third root sequence may be identical or different, and this is not particularly limited in the present invention.

Accordingly, in S220, the UE may determine the first frequency domain resource from the first carrier according to the frequency domain indication information and acquire the first RS from the first frequency domain resource. In the embodiment of the present invention, the UE may perform synchronous tracking of time domain and frequency domain according to the first RS.

According to the method for transmitting a reference signal in the embodiment of the present invention, after selecting the resource used for bearing the RS from the first carrier, the first point device transmits the RS to the user equipment through the selected resource, to make the position of the resource used for bearing the RS in the first carrier be not fixed, so that the cost of the resource used for bearing the RS may be reduced and the resource used for bearing the RS may be configured flexibly.

Moreover, the first point device may determine the first frequency domain resource according to the second carrier, namely the RS resource configuration information of the carrier used by a neighboring point device or a neighboring cell of the first point device, for example, the configuration position of the first frequency domain resource may be different from that of a second frequency domain resource used for bearing the RS in the second carrier in the system bandwidth, so that the inter-frequency interference between the carriers in the system may be reduced.

In addition, the first point device may notify the user equipment of the configuration of the frequency domain resource used for bearing the RS in the first carrier, in the format of signaling by use of the carrier existing in the system. Therefore, the resource configuration may be saved, and the practicability and the resource utilization rate are improved.

In MTC communication (corresponding to condition 7), for the MTC device, the condition that the communication frequency band of the UE may not be located at the center of the system bandwidth may exist. According to the prior art, it is regulated that the pilot carrier may only be located at the center of the system bandwidth, under this condition, the UE could not acquire the reference signal, thus failing to perform synchronous tracking. In contrast, according to the method for transmitting a reference signal in the present invention, by enabling the first point device (TP) to flexibly configure CRS, the frequency domain resource used for bearing the reference signal may be determined according to the communication frequency band of the UE, so that the UE may be ensured to acquire the reference signal, in order to perform the synchronous tracking.

Under the condition that such serving cell with low load at night have service demand and a neighboring cell is idle (corresponding to the condition 8), the neighboring cell (idle cell) has no service demand, and the idle cell (a point in the idle cell) only sends a CRS. When the serving cell performs CSI measurement, since the CRS configured by the neighboring cell do not collide, the signal-to-noise ratio (SNR, Signal-to-Noise Ratio) measured by the UE at the center of the cell will be very high, so that a very high modulation and coding scheme (MCS, Modulation and Coding Scheme) is determined. But when data are actually transmitted, the interference of high code rate (for example, 64 QAM) to the low-power pilot carrier is still sensitive. The CRS pilot carriers occurring together will induce certain performance loss. Therefore, fixed CRS configuration will cause fixed interference which is difficult to be solved by an inter-cell interference coordination (ICIC, Inter-Cell Interference Coordination) technology, and the influence of the interference under the condition of high code rate is quite severe. In contrast, according to the method for transmitting a reference signal in the present invention, by enabling the neighboring idle cell (a point in the idle cell) to flexibly configure the CRS, the fixed interference is reduced beneficially.

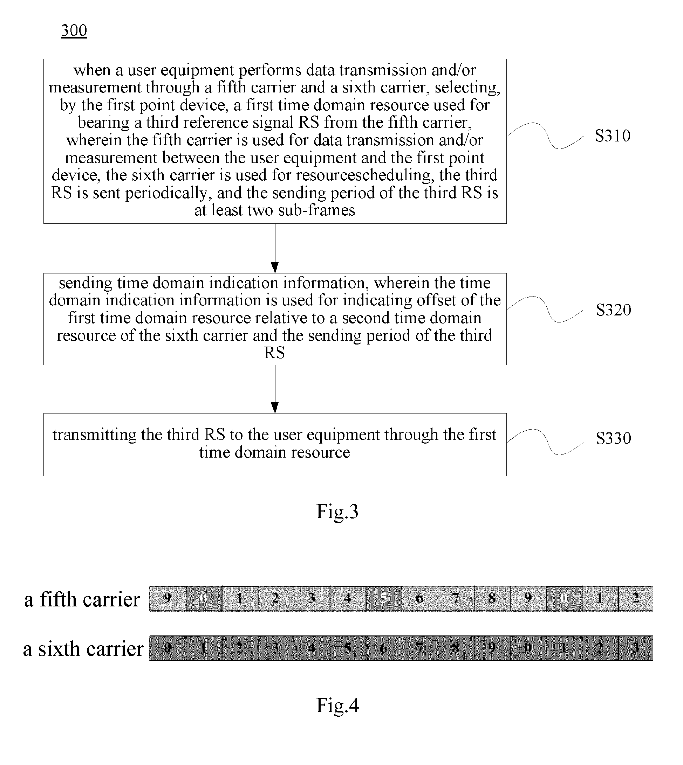

Fig. 3 shows a schematic flow diagram of a method for transmitting a reference signal 300 according to an embodiment of the present invention and described from the angle of a first point device, in the method 300, the first point device configures a time domain resource used for bearing the RS and transmits a reference signal to a UE. As shown in Fig. 3, the method 300 includes:
S310, when a user equipment performs data transmission and/or measurement through a fifth carrier and a sixth carrier, selecting, by the first point device, a first time domain resource used for bearing a third reference signal RS from the fifth carrier, wherein the fifth carrier is used for data transmission and/or measurement between the user equipment and the first point device, the sixth carrier is used for resource scheduling, the third RS is sent periodically, and the sending period of the third RS is at least two sub-frames;
S320, sending time domain indication information, wherein the time domain indication information is used for indicating offset of the first time domain resource relative to a second time domain resource of the sixth carrier and the sending period of the third RS; and
S330, transmitting the third RS to the user equipment through the first time domain resource.

The method for transmitting a reference signal 300 in the embodiment of the present invention may be applicable to a variety of scenarios.

### Condition 9

Optionally, the first point device is a micro base station, an access point or a transmission point, and
the sixth carrier is a carrier used by a macro point.

Specifically, for example, in a heterogeneous network (Het Net, Heterogeneous Network) technology, a multilayer multicarrier heterogeneous network enhancement technology or a coordinated multiple point transmission/reception (Coordinated Multiple Point transmission/reception, CoMP) technology, a micro base station (also called a pico base station) (Pico), an access point (AP, Access Point) or a transmission point (TP, Transmission Point) is mainly used for transmitting data to the UE, namely, the carrier used by the Pico, AP or TP is mainly used for transmitting data, the macro base station (Macro) is mainly used for performing scheduling and resource allocation for the UE, namely, such functions as scheduling and resource allocation and the like are finished by the carrier used by the macro base station, thus for the carrier used by the AP or TP, there is no need to keep the same pilot carrier cost (namely, a resource used for bearing the RS, and more specifically, a time domain resource herein) as the carrier used by the macro base station. Therefore, the method 300 according to the embodiment of the present invention may be applicable to conditions of transmitting the RS by using the carrier (an example of the fifth carrier) used by the Pico, AP or TP.

Under this condition, the first point device may be a Pico in the heterogeneous network technology, may be an AP in the multilayer multicarrier heterogeneous network enhancement technology, and may also be a TP in the coordinated multiple point transmission/reception technology.

The carrier used by the Pico, AP or TP may be taken as the fifth carrier.

The carrier having the same frequency as the fifth carrier and used by a neighboring first point device or a neighboring cell of the first point device may be taken as the seventh carrier (namely, a carrier may be generating interference with the fifth carrier and will be illustrated in detail soon afterwards).

The carrier used by the macro base station may be taken as the sixth carrier (used for notifying the UE of the position of a time domain resource configured by the first point device and will be illustrated in detail soon afterwards).

### Condition 10

Optionally, the fifth carrier is a new carrier type NCT carrier, and the sixth carrier is a main component carrier.

Specifically, for example, in an LTE/LTE-A network, the new carrier type (NCT, New Carrier Type) is defined. The NCT carrier is mainly used for transmitting data, such functions as scheduling and resource allocation for the UE and the like are finished by the main component carrier (CC, Component Carrier), thus for a new carrier, there is no need to keep the same pilot carrier cost (namely, a resource used for bearing the RS, and more specifically, a time domain resource herein) as the main CC. Therefore, the method 300 according to the embodiment of the present invention may be applicable to conditions of transmitting the RS by using the NCT carrier (an example of the fifth carrier).

Under this condition, the first point device may be a base station device using the NCT carrier, and the base station device may be a base transceiver station (BTS, Base Transceiver Station) in GSM or CDMA, may be a base station (NodeB) in WCDMA, may be an evolutional base station (eNB or e-NodeB, evolutional Node B) in LTE, and may be the above-mentioned Pico, AP or TP.

The NCT carrier may be taken as the fifth carrier.

The carrier having the same frequency as the fifth carrier and used by a neighboring first point device or a neighboring cell of the first point device may be used as a seventh carrier (namely, a carrier may be generate interference with the fifth carrier and will be illustrated in detail soon afterwards).

The main CC may be taken as the sixth carrier (used for notifying the UE of the position of a time domain resource configured by the first point device and will be illustrated in detail soon afterwards).

It should be noted that, in the embodiment of the present invention, when the first point device is the Pico, AP or TP, the main CC as the sixth carrier may be a carrier used by a macro point, may also be a carrier used by the first point device and this is not particularly limited in the present invention.

### Condition 11

The fifth carrier is a carrier used for performing MTC, and the sixth carrier is a carrier located in the same preset frequency domain bandwidth as the fifth carrier.

Specifically, for an MTC device (an example of the user equipment), a bandwidth of the used carrier (transmitting data and reference signals) thereof is reduced. Therefore, the method 300 according to the embodiment of the present invention may be applicable to conditions of transmitting the RS by using the carrier (another example of the fifth carrier) used by the MTC device.

Under this condition, the first point device may be a base station device performing MTC communication with the MTC device, and the base station device may be a base transceiver station (BTS, Base Transceiver Station) in GSM or CDMA, may be a base station (NodeB) in WCDMA, and may be an evolutional base station (eNB or e-NodeB, evolutional Node B) in LTE.

The carrier used by the MTC device may be taken as the fifth carrier.

In the embodiment of the present invention, the first carrier used for performing MTC communication is a part in the preset frequency domain bandwidth, therefore other carriers in the preset frequency domain bandwidth may be taken as the sixth carrier (used for notifying the UE of the position of the time domain resource configured by the first point device and will be illustrated in detail soon afterwards).

It should be understood that, the scenarios (condition 9 to condition 11) listed above are merely exemplary illustration, the present invention is not limited hereto, other conditions capable of reducing the pilot carrier cost may be applicable to the method 300 according to the embodiment of the present invention and shall fall within the protection scope of the present invention, for example, under the condition that the first point device is a macro point device (called a first macro point device), and the first macro point device and other macro point devices (called a second macro point device) cooperatively serve the user equipment (for example, the first macro point device mainly transmits data for the user equipment and the second macro point device mainly transmits resource scheduling information for the user equipment), the carrier used for communication between the first macro point device and the user equipment may be taken as the fifth carrier, and the carrier used for communication between the second macro point device and the user equipment may be taken as the sixth carrier. Similarly, for example, under the condition that the first point device is a micro base station (called a first micro base station), and the first micro base station and other micro base stations (called a second micro base station) cooperatively serve the user equipment (for example, the first micro base station mainly transmits data for the user equipment and the second micro base station mainly transmits resource scheduling information for the user equipment), the carrier used for communication between the first micro base station and the user equipment may be taken as the fifth carrier, and the carrier used for communication between the second micro base station and the user equipment may be taken as the sixth carrier.

In S310, the first point device bears the RS on the particular sub-frame (an example of the first time domain resource, hereafter referred to as an RS sub-frame as follows) of the fifth carrier, moreover, the configuration of the RS on the time domain resource of the fourth carrier is periodic, in order to save the signaling cost. It should be noted that, when multiple fifth carriers exist, the positions of the RS sub-frames in the carriers may be randomized as much as possible, in order to reduce the condition that the same sub-frame has multiple first time domain resources at the same time. Since the first point device actively and flexibly configures the first time domain resource, the UE needs to be notified of the specific position of the first time domain resource (through time domain indication information).

In the embodiment of the present invention, the time domain indication information may be used for indicating the relative position of the RS sub-frame relative to a regulated reference sub-frame (an example of a second time domain resource) in the sixth carrier.

As shown in Fig. 4, when the first point device selects the #0 and #5 of the fifth carriers as the RS sub-frames, and when the UE is notified of the positions of the RS sub-frames, the UE may be notified that the RS is configured (sent) in a period of 5 ms, and that the relative position of the first RS sub-frame relative to a regulated reference sub-frame (an example of second time domain information) in the sixth carrier. For example:
if the #0 sub-frame of the sixth carrier is taken as the above-mentioned reference sub-frame, an offset value may be set to be 1, and the offset of the RS sub-frame in the fifth carrier relative to the #0 sub-frame (an example of the reference sub-frame) in the sixth carrier is indicated to be 1.

It should be understood that, the manners of determining the time domain indication information listed above are merely exemplary illustration, the present invention is not limited hereto, for example, the number of the first time domain resources (RS sub-frames) may be one or multiple, namely, within one RS sending period, one RS sub-frame or multiple RS sub-frames may be sent, and this is not particularly limited in the present invention.

Optionally, before the selecting a first time domain resource used for bearing a third reference signal RS, the method further includes:
acquiring reference information, wherein the reference information is used for indicating the resource configuration of a seventh carrier used for bearing a fourth RS, wherein the seventh carrier is a carrier used by a neighboring point device or a neighboring cell of the first point device; and
the selecting a first time domain resource used for bearing a third reference signal RS, includes:
   selecting, by the first point device, the first time domain resource from the fifth carrier according to the reference information, for ensuring that the resource configuration of the fifth carrier and the seventh carrier in the same sub-frame is different.

Specifically, when multiple point devices (for example, multiple Pico, AP or TP) exists in the system, as stated above, the carrier used by the implementation main body, namely the first point device of the method for transmitting a signal 300 of the embodiment of the present invention is taken as the fifth carrier, the carrier used by other point devices is called the seventh carrier, when the cell of the implementation main body, namely the first point device of the method for transmitting a signal 300 of the embodiment of the present invention has a neighboring cell (one or multiple), the carrier used by the first point device is taken as the fifth carrier, and the carrier used by a neighboring cell is called the seventh carrier.

When the fifth carrier and the seventh carrier have the same frequency, and if the resource configuration of the above-mentioned fifth carrier is the same as that of the seventh carrier, namely, the same resource configuration exists on the same sub-frame, the carriers may interfere with each other.

Therefore, in the embodiment of the present invention, the first point device may determine the first time domain resource according to the seventh carrier, namely, the RS resource configuration information of the carrier used by a neighboring point device or a neighboring cell of the first point device, for example, the configuration position in the system bandwidth of the first time domain resource may be different from that of a second time domain resource used for bearing the RS in the seventh carrier.

In addition, it should be noted that, if the fifth carrier is an NCT carrier, the seventh carrier may be another NCT carrier. If the fifth carrier is a carrier used by the Pico, AP or TP, the seventh carrier may be a carrier used by another Pico, AP or TP in the system. If the fifth carrier is a carrier used by the MTC device, the seventh carrier may be a carrier allocated by the first point device to another MTC device.

In S320, the first point device may send the time domain indication information to the UE.

Optionally, the sending the time domain indication information, includes:
sending the time domain indication information to a third point device, for enabling the third point device to send the time domain indication information to the user equipment through the sixth carrier.

Specifically, in condition 9, when the first point device is a Pico, AP or TP, the first point device may send the time domain indication information to a macro point (may also be called a macro base station), so that the macro point may notify the UE of the configuration (for example, the position and length of the first time domain resource in the first carrier) of the first time domain resource through the used carrier (for example, a carrier used for resource scheduling and configuration for the UE) thereof.

Similarly, for example, under the condition that the first point device is a macro point device (called a first macro point device), and the first macro point device and other macro point devices (called a second macro point device) cooperatively serve the user equipment (for example, the first macro point device mainly transmits data for the user equipment and the second macro point device mainly transmits resource scheduling information for the user equipment), the fifth carrier is used for communication between the first macro point device and the user equipment, and the sixth carrier is used for communication between the second macro point device and the user equipment, so that the first macro point device may send the time domain indication information to the second macro point device, and then the second macro point device may notify the UE of the configuration (for example, the position and length of the first time domain resource in the fifth carrier) of the first time domain resource through a used carrier (another example of the sixth carrier, for example, a carrier used for resource scheduling and configuration for the UE) thereof.

Similarly, for example, under the condition that the first point device is a micro base station (called a first micro base station), and the first micro base station and other micro base stations (called a second micro base station) cooperatively serve the user equipment (for example, the first micro base station mainly transmits data for the user equipment and the second micro base station mainly transmits resource scheduling information for the user equipment), the fifth carrier is used for communication between the first micro base station and the user equipment, and the sixth carrier is used for communication between the second micro base station and the user equipment, so that the first micro base station may send the time domain indication information to the second micro base station, and then the second micro base station may notify the UE of the configuration (for example, the position and length of the first time domain resource in the fifth carrier) of the first time domain resource through a used carrier (another example of the sixth carrier, for example, a carrier used for resource scheduling and configuration for the UE) thereof. It should be noted that, the condition that the first point device is a micro base station is listed above, but the present invention is also applicable to the condition that the first point device is an access point (mainly used for transmitting data) or a transmission point (mainly used for transmitting data), under this condition, the second point device is corresponding to the first point device and is an access point (mainly used for resource scheduling) or a transmission point (mainly used for resource scheduling).

In condition 10, namely, when the first carrier is the NCT carrier, the main CC (as stated above, used for resource scheduling and configuration for the UE) may be used for notifying the UE of the configuration (for example, the position and length of the first time domain resource in the first carrier) of the first time domain resource. Moreover, in the embodiment of the present invention, the time domain indication information may be transmitted through a PDCCH.

It should be noted that, for example, when the first point device is a Pico, AP or TP, and if the fifth carrier is the NCT carrier, the sixth carrier may be a main CC used by a macro point.

In condition 11, namely, when the first carrier is the carrier used for performing MTC communication, for the MTC device (an example of the user equipment), the bandwidth of the used carrier (transmitting data and reference signals) thereof is reduced, so that a part of frequency bands may be selected from the preset frequency domain bandwidth to serve as the fifth carrier, accordingly, a carrier (an example of the sixth carrier) located in the same preset frequency domain bandwidth as the first carrier may be used for notifying the UE of the configuration (for example, the position and length of the first time domain resource in the first carrier) of the first time domain resource. For example, the time domain indication information may be transmitted through a PDCCH. It should be noted that, the frequency domain configuration of the sixth carrier may be different from the frequency domain configuration of the fifth carrier and may also be the same as the frequency domain configuration of the fifth carrier, however, under the condition that the frequency domain configuration of the sixth carrier may be the same as the frequency domain configuration of the fifth carrier, the time domain configuration of the sixth carrier is different from that of the fifth carrier.

According to the embodiment of the present invention, by bearing the time domain indication information through the carrier existing in the system, no additional signaling is needed to add, so that communication resources are saved.

According to the method for transmitting a reference signal in the embodiment of the present invention, after determining the resource used for bearing the RS from the first carrier, the first point device transmits the RS to the user equipment through the determined resource, to make the position of the resource used for bearing the RS in the first carrier be not fixed, so that the cost of the resource used for bearing the RS may be reduced and the resource used for bearing the RS may be configured flexibly.

Optionally, the sending the time domain indication information, includes:
sending the time domain indication information to the user equipment through a reserved resource in a synchronous channel.

Specifically, in the synchronous channel, a synchronous signal only occupies 62 subcarriers among 72 subcarriers, and 10 resource units are reserved resources, thus the 10 reserved resource units may be used for notifying the UE of the configuration of the first time domain resource. In the embodiment of the present invention, on the 10 reserved resource units, for example, by using Walsh (Walsh) sequence modulation and by using a Walsh sequence with the length of 8, 3 bits may be transmitted on a primary synchronization sequence (PSS, primary synchronization sequence), and 3 bits may be transmitted on a secondary synchronization sequence (SSS, secondary synchronization sequence), so that no pilot carrier demodulation is needed. In addition, it should be noted that, the synchronous channel may be a synchronous channel in the above-mentioned first carrier, may also be a synchronous channel in the above-mentioned third carrier, may also be another synchronous channel for transmitting carriers between the first point device and the UE, and this is not particularly limited in the present invention.

According to the embodiment of the present invention, by bearing the time domain indication information through the reserved resources in the synchronous channel, no new signaling is needed to add, so that the communication resources are saved.

Optionally, the sending the time domain indication information, includes:
sending the time domain indication information to the user equipment through a radio resource control RRC signaling.

Specifically, in the embodiment of the present invention, the first point device may also notify the UE of the configuration of the first time domain resource through a radio resource control (RRC, Radio Resource Control) signaling.

According to the method for transmitting a reference signal in the embodiment of the present invention, after selecting the resource used for bearing the RS from the first carrier, the first point device transmits the RS to the user equipment through the selected resource, to make the position of the resource used for bearing the RS in the first carrier be not fixed, so that the cost of the resource used for bearing the RS may be reduced and the resource used for bearing the RS may be configured flexibly.

Moreover, the first point device may determine the first time domain resource according to the seventh carrier, namely, the RS resource configuration information of the carrier used by a neighboring point device or a neighboring cell of the first point device, for example, the configuration position of the first time domain resource may be different from that of a second time domain resource used for bearing the RS in the second carrier in the system bandwidth, so that the inter-frequency interference between the carriers in the system may be reduced.

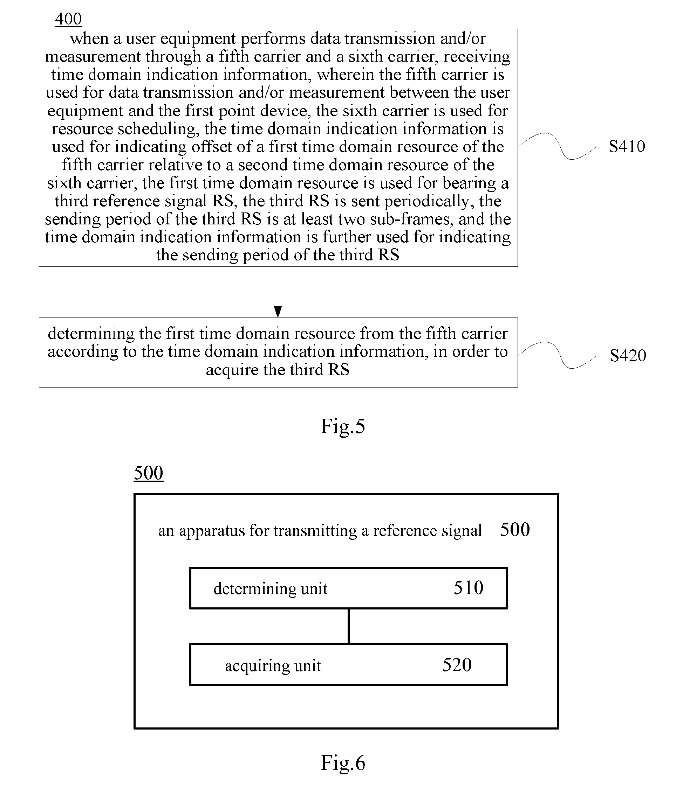

Fig. 5 shows a schematic flow diagram of a method for transmitting a reference signal 400 according to an embodiment of the present invention and described from the angle of a user equipment, in the method 400, the UE determines a time domain resource used for bearing the RS configured by a first point device, and acquires a reference signal from the time domain resource. As shown in Fig. 5, the method 400 includes:
S410, when a user equipment performs data transmission and/or measurement through a fifth carrier and a sixth carrier, receiving time domain indication information, wherein the fifth carrier is used for data transmission and/or measurement between the user equipment and the first point device, the sixth carrier is used for resource scheduling, the time domain indication information is used for indicating offset of a first time domain resource of the fifth carrier relative to a second time domain resource of the sixth carrier, the first time domain resource is used for bearing a third reference signal RS, the third RS is sent periodically, the sending period of the third RS is at least two sub-frames, and the time domain indication information is further used for indicating the sending period of the third RS; and
S420, determining the first time domain resource from the fifth carrier according to the time domain indication information, in order to acquire the third RS.

The method for transmitting a reference signal 400 in the embodiment of the present invention may be applicable to a variety of scenarios.

### Condition 12

Optionally, the fifth carrier is used for communication between the first point device and the user equipment, the sixth carrier is used for communication between a third point device and the user equipment, wherein the third point device cooperates with the first point to communicate with the user equipment.

Specifically, for example, in a heterogeneous network (Het Net, Heterogeneous Network) technology, a multilayer multicarrier heterogeneous network enhancement technology or a coordinated multiple point transmission/reception (Coordinated Multiple Point transmission/reception, CoMP) technology, a micro base station (also called a pico base station) (Pico), an access point (AP, Access Point) or a transmission point (TP, Transmission Point) is mainly used for transmitting data to the UE, namely, the carrier used by the Pico, AP or TP is mainly used for transmitting data, the macro base station (Macro) is mainly used for performing scheduling and resource allocation for the UE, namely, such functions as scheduling and resource allocation and the like are finished by the carrier used by the macro base station, thus for the carrier used by the AP or TP, there is no need to keep the same pilot carrier cost (namely, a resource used for bearing the RS, and more specifically, a time domain resource herein) as the carrier used by the macro base station. Therefore, the method 300 according to the embodiment of the present invention may be applicable to conditions of transmitting the RS by using the carrier (an example of the fifth carrier) used by the Pico, AP or TP.

Under this condition, the first point device may be a Pico in the heterogeneous network technology, may be an AP in the multilayer multicarrier heterogeneous network enhancement technology, and may also be a TP in the coordinated multiple point transmission/reception technology.

The carrier used by the Pico, AP or TP may be taken as the fifth carrier.

The carrier used by the macro base station may be taken as the sixth carrier (used for notifying the UE of the position of a time domain resource configured by the first point device and will be illustrated in detail soon afterwards).

### Condition 13

Optionally, the fifth carrier is a new carrier type NCT carrier, and the sixth carrier is a main component carrier.

Specifically, for example, in an LTE/LTE-A network, the new carrier type (NCT, New Carrier Type) is defined. The NCT carrier is mainly used for transmitting data, such functions as scheduling and resource allocation for the UE and the like are finished by the main component carrier (CC, Component Carrier), thus for a new carrier, there is no need to keep the same pilot carrier cost (namely, a resource used for bearing the RS, and more specifically, a time domain resource herein) as the main CC. Therefore, the method 300 according to the embodiment of the present invention may be applicable to conditions of transmitting the RS by using the NCT carrier (an example of the fifth carrier).

Under this condition, the first point device may be a base station device using the NCT carrier, and the base station device may be a base transceiver station (BTS, Base Transceiver Station) in GSM or CDMA, may be a base station (NodeB) in WCDMA, may be an evolutional base station (eNB or e-NodeB, evolutional Node B) in LTE, and may be the above-mentioned Pico, AP or TP.

The NCT carrier may be taken as the fifth carrier.

The main CC may be taken as the sixth carrier (used for notifying the UE of the position of the time domain resource configured by the first point device and will be illustrated in detail soon afterwards).

It should be noted that, in the embodiment of the present invention, when the first point device is the Pico, AP or TP, the main CC as the sixth carrier may be a carrier used by a macro point, may also be a carrier used by the first point device and this is not particularly limited in the present invention.

### Condition 14

The fifth carrier is a carrier used for performing MTC, and the sixth carrier is a carrier located in the same preset frequency domain bandwidth as the fifth carrier.

Specifically, for MTC device (an example of the user equipment), a bandwidth of the used carrier (transmitting data and reference signals) thereof is reduced. Therefore, the method 300 according to the embodiment of the present invention may be applicable to conditions of transmitting the RS by using the carrier (another example of the fifth carrier) used by the MTC device.

Under this condition, the first point device may be a base station device performing MTC communication with the MTC device, and the base station device may be a base transceiver station (BTS, Base Transceiver Station) in GSM or CDMA, may be a base station (NodeB) in WCDMA, and may be an evolutional base station (eNB or e-NodeB, evolutional Node B) in LTE.

The carrier used by the MTC device may be taken as the fifth carrier.

In the embodiment of the present invention, the first carrier used for performing MTC communication is a part in the preset time domain bandwidth, therefore other carriers in the preset time domain bandwidth may be taken as the sixth carrier (used for notifying the UE of the position of the time domain resource configured by the first point device and will be illustrated in detail soon afterwards).

It should be understood that, the scenarios (condition 12 to condition 14) listed above are merely exemplary illustration, the present invention is not limited hereto, other conditions capable of reducing the pilot carrier cost may be applicable to the method 400 according to the embodiment of the present invention and shall fall within the protection scope of the present invention, for example, under the condition that the first point device is a macro point device (called a first macro point device), and the first macro point device and other macro point devices (called a second macro point device) cooperatively serve the user equipment (for example, the first macro point device mainly transmits data for the user equipment and the second macro point device mainly transmits resource scheduling information for the user equipment), the carrier used for communication between the first macro point device and the user equipment may be taken as the fifth carrier, and the carrier used for communication between the second macro point device and the user equipment may be taken as the sixth carrier. Similarly, for example, under the condition that the first point device is a micro base station (called a first micro base station), and the first micro base station and other micro base stations (called a second micro base station) cooperatively serve the user equipment (for example, the first micro base station mainly transmits data for the user equipment and the second micro base station mainly transmits resource scheduling information for the user equipment), the carrier used for communication between the first micro base station and the user equipment may be taken as the fifth carrier, and the carrier used for communication between the second micro base station and the user equipment may be taken as the sixth carrier.

In the embodiment of the present invention, the first point device bears the RS on the particular sub-frame (an example of the first time domain resource, hereafter referred to as an RS sub-frame) of the fifth carrier, moreover, the configuration of the RS on the time domain resource of the fourth carrier is periodic, in order to save the signaling cost. It should be noted that, when multiple fifth carriers exist, the positions of the RS sub-frames in the carriers may be randomized as much as possible, in order to reduce the condition that the same sub-frame has multiple first time domain resources at the same time. Since the first point device actively and flexibly configures the first time domain resource, the UE needs to be notified of the specific position of the first time domain resource (through time domain indication information).

In the embodiment of the present invention, the time domain indication information may be used for indicating the relative position of the RS sub-frame relative to the regulated reference sub-frame in the sixth carrier.

As shown in Fig. 4, when the first point device selects the #0 and #5 of the fifth carriers as the RS sub-frames, and when the UE is notified of the positions of the RS sub-frames, the UE may be notified that the RS is configured (sent) in a period of 5 ms, and that the relative position of the first RS sub-frame relative to a regulated reference sub-frame (an example of second time domain information) in the sixth carrier. For example:
if the #0 sub-frame of the sixth carrier is taken as the above-mentioned reference sub-frame, an offset value may be set to be 1, and the offset of the RS sub-frame in the fifth carrier relative to the #0 sub-frame (an example of the reference sub-frame) in the sixth carrier is indicated to be 1.

It should be understood that, the manners of determining the time domain indication information listed above are merely exemplary illustration, the present invention is not limited hereto, for example, the number of the first time domain resources (RS sub-frames) may be one or multiple, namely, within one RS sending period, one RS sub-frame or multiple RS sub-frames may be sent, and this is not particularly limited in the present invention.

Moreover, when multiple point devices (for example, multiple Pico, AP or TP) exists in the system, as stated above, the carrier used by the implementation main body, namely the first point device of the method for transmitting a signal 400 of the embodiment of the present invention is taken as the fifth carrier, the carrier used by other point devices is called the seventh carrier, when the cell of the implementation main body, namely the first point device of the method for transmitting a signal 400 of the embodiment of the present invention has a neighboring cell (one or multiple), the carrier used by the first point device is taken as the fifth carrier, and the carrier used by the a neighboring cell is called the seventh carrier.

When the fifth carrier and the seventh carrier have the same frequency, and if the resource configuration of the above-mentioned fifth carrier is the same as that of the seventh carrier, namely, the same resource configuration exists on the same sub-frame, the carriers may interfere with each other.

Therefore, in the embodiment of the present invention, the first point device may determine the first time domain resource according to the seventh carrier, namely, the RS resource configuration information of the carrier used by a neighboring point device or a neighboring cell of the first point device, for example, the configuration position in the system bandwidth of the first time domain resource may be different from that of a second time domain resource used for bearing the RS in the seventh carrier.

In addition, it should be noted that, if the fifth carrier is an NCT carrier, the seventh carrier may be another NCT carrier. If the fifth carrier is a carrier used by the Pico, AP or TP, the seventh carrier may be a carrier used by another Pico, AP or TP in the system. If the fifth carrier is a carrier used by the MTC device, the seventh carrier may be a carrier allocated by the first point device to another MTC device.

Thereafter, the first point device may send the time domain indication information to the UE.

Optionally, the receiving the time domain indication information, includes:
receiving the time domain indication information sent by a third point device through the sixth carrier, wherein the time domain indication information is acquired by the third point device from the first point device.

In condition 12, namely, when the first point device is a Pico, AP or TP, the first point device may send the frequency domain indication information to a macro point (may also be called a macro base station), so that the macro point may notify the UE of the configuration (for example, the position and length of the first frequency domain resource in the first carrier) of the first frequency domain resource through the used carrier (for example, a carrier used for resource scheduling and configuration for the UE) thereof.

Similarly, for example, under the condition that the first point device is a macro point device (called a first macro point device), and the first macro point device and other macro point devices (called a second macro point device) cooperatively serve the user equipment (for example, the first macro point device mainly transmits data for the user equipment and the second macro point device mainly transmits resource scheduling information for the user equipment), the fifth carrier is used for communication between the first macro point device and the user equipment, and the sixth carrier is used for communication between the second macro point device and the user equipment, so that the first macro point device may send the time domain indication information to the second macro point device, and then the second macro point device may notify the UE of the configuration (for example, the position and length of the first time domain resource in the fifth carrier) of the first time domain resource through a used carrier (another example of the sixth carrier, for example, a carrier used for resource scheduling and configuration for the UE) thereof.

Similarly, for example, under the condition that the first point device is a micro base station (called a first micro base station), and the first micro base station and other micro base stations (called a second micro base station) cooperatively serve the user equipment (for example, the first micro base station mainly transmits data for the user equipment and the second micro base station mainly transmits resource scheduling information for the user equipment), the fifth carrier is used for communication between the first micro base station and the user equipment, and the sixth carrier is used for communication between the second micro base station and the user equipment, so that the first micro base station may send the time domain indication information to the second micro base station, and then the second micro base station may notify the UE of the configuration (for example, the position and length of the first time domain resource in the fifth carrier) of the first time domain resource through a used carrier (another example of the sixth carrier, for example, a carrier used for performing resource scheduling and configuration on the UE) thereof. It should be noted that, the condition that the first point device is a micro base station is listed above, but the present invention is also applicable to the condition that the first point device is an access point (mainly used for transmitting data) or a transmission point (mainly used for transmitting data), under this condition, the second point device is corresponding to the first point device and is an access point (mainly used for resource scheduling) or a transmission point (mainly used for resource scheduling).

In condition 13, namely, when the first carrier is the NCT carrier, the main CC (as stated above, used for resource scheduling and configuration for the UE) may be used for notifying the UE of the configuration (for example, the position and length of the first frequency domain resource in the first carrier) of the first frequency domain resource. Moreover, in the embodiment of the present invention, the frequency domain indication information may be transmitted through a PDCCH.

It should be noted that, for example, when the first point device is a Pico, AP or TP, and if the fifth carrier is the NCT carrier, the sixth carrier may be a main CC used by a macro point.

In condition 14, namely, when the first carrier is the carrier used for performing MTC communication, for the MTC device (an example of the user equipment), the bandwidth of the used carrier (transmitting data and reference signals) thereof is reduced, so that a part of frequency bands may be selected from the preset frequency domain bandwidth to serve as the fifth carrier, accordingly, a carrier (an example of the sixth carrier) located in the same preset frequency domain bandwidth as the fifth carrier may be used for notifying the UE of the configuration (for example, the position and length of the first time domain resource in the first carrier) of the first time domain resource. For example, the time domain indication information may be transmitted through a PDCCH. It should be noted that, the frequency domain configuration of the sixth carrier may be different from the frequency domain configuration of the fifth carrier and may also be the same as the frequency domain configuration of the fifth carrier, however, under the condition that the frequency domain configuration of the sixth carrier may be the same as the frequency domain configuration of the fifth carrier, the time domain configuration of the sixth carrier is different from that of the fifth carrier.

According to the embodiment of the present invention, by bearing the time domain indication information through the carrier existing in the system, no additional signaling is needed to add, so that communication resources are saved.

According to the method for transmitting a reference signal in the embodiment of the present invention, after determining the resource used for bearing the RS from the first carrier, the first point device transmits the the RS to the user equipment through the determined resource, to make the position of the resource used for bearing the RS in the first carrier be not fixed, so that the cost of the resource used for bearing the RS may be reduced and the resource used for bearing the RS may be configured flexibly.

Optionally, the receiving the time domain indication information, includes:
receiving the time domain indication information through a reserved resource in a synchronous channel.

Specifically, in the synchronous channel, a synchronous signal only occupies 62 subcarriers among 72 subcarriers, and 10 resource units are reserved resources, thus the 10 reserved resource units may be used for notifying the UE of the configuration of the first time domain resource. In the embodiment of the present invention, on the 10 reserved resource units, for example, by using Walsh (Walsh) sequence modulation and by using a Walsh sequence with the length of 8, 3 bits may be transmitted on a primary synchronization sequence (PSS, primary synchronization sequence), and 3 bits may be transmitted on a secondary synchronization sequence (SSS, secondary synchronization sequence), so that no pilot carrier demodulation is needed. In addition, it should be noted that, the synchronous channel may be a synchronous channel in the above-mentioned first carrier, may also be a synchronous channel in the above-mentioned third carrier, may also be another synchronous channel for transmitting carriers between the first point device and the UE, and this is not particularly limited in the present invention.

According to the embodiment of the present invention, by bearing the time domain indication information through the reserved resources in the synchronous channel, no new signaling is needed to add, so that the communication resources are saved.

Optionally, the receiving the time domain indication information, includes:
receiving the time domain indication information to the user equipment through a radio resource control RRC signaling.

Specifically, in the embodiment of the present invention, the first point device may also notify the UE of the configuration of the first time domain resource through a radio resource control (RRC, Radio Resource Control) signaling.

Accordingly, in S410, the UE may determine the first time domain resource from the fifth carrier according to the time domain indication information.

In the embodiment of the present invention, the time domain indication information may be used for indicating the relative position of the RS sub-frame relative to the regulated reference sub-frame in the sixth carrier.

As shown in Fig. 4, when the first point device selects the #0 and #5 of the fifth carriers as the RS sub-frames, and when the UE is notified of the positions of the RS sub-frames, the UE may be notified that the RS is configured (sent) in a period of 5 ms, and that the relative position of the first RS sub-frame relative to a regulated reference sub-frame (an example of second time domain information) in the sixth carrier. For example:
if the #0 sub-frame of the sixth carrier is taken as the above-mentioned reference sub-frame, an offset value may be set to be 1, and the offset of the RS sub-frame in the fifth carrier relative to the #0 sub-frame (an example of the reference sub-frame) in the sixth carrier is indicated to be 1.

Accordingly, the UE may determine the first time domain resource according to the reference sub-frame (the above-mentioned #0 sub-frame) in the sixth carrier and the offset value, so as to determine the third RS in S420, and in the embodiment of the present invention, the UE may perform synchronous tracking of time domain and frequency domain according to the third RS.

According to the method for transmitting a reference signal in the embodiment of the present invention, after selecting the resource used for bearing the RS from the first carrier, the first point device transmits the RS to the user equipment through the selected resource, to make the position of the resource used for bearing the RS in the first carrier be not fixed, so that the cost of the resource used for bearing the RS may be reduced and the resource used for bearing the RS may be configured flexibly.

Moreover, the first point device may determine the first time domain resource according to the seventh carrier, namely, the RS resource configuration information of the carrier used by a neighboring point device or a neighboring cell of the first point device, for example, the configuration position in the system bandwidth of the first time domain resource may be different from that of a second time domain resource used for bearing the RS in the seven carrier, so that the inter-frequency interference between the carriers in the system may be reduced.

The method for transmitting a reference signal according to the embodiment of the present invention has been described above in combination with Fig. 1 to Fig. 5, and the appratus for transmitting a reference signal according to the embodiment of the present invention will be described below in detail in combination with Fig. 6 to Fig. 9.

Fig. 6 shows a schematic flow diagram of an apparatus for transmitting a reference signal 500 according to an embodiment of the present invention. As shown in Fig. 6, the method 500 includes:
a selecting unit 510, configured to enable a first point device to select a first frequency domain resource used for bearing a first reference signal RS from a first carrier, wherein the first carrier is used for data transmission and/or measurement between the first point device and a user equipment, and the number of resource units included in the first frequency domain resource is smaller than a system bandwidth of the first carrier; and
a sending unit 520, configured to transmit the first RS to the user equipment through the first frequency domain resource selected by the selecting unit 510.

Optionally, the first point device is a micro base station, an access point or a transmission point.

Optionally, the first carrier is a new carrier type NCT carrier or a carrier used for performing machine type communication MTC.

### Optionally, the first point device is located in an idle cell.

Optionally, the sending unit 520 is further configured to send frequency domain indication information used for indicating the first frequency domain resource, for enabling the user equipment to determine the first frequency domain resource from the first carrier according to the frequency domain indication information, in order to acquire the first RS.

Optionally, the sending unit 520 is specifically configured to send the frequency domain indication information used for indicating the first frequency domain resource through a third carrier, wherein,
when the first carrier is an NCT carrier, the third carrier is a main component carrier;
when the first carrier is a carrier used for performing MTC, the third carrier is a carrier located in the same preset frequency domain bandwidth as the first carrier.

Optionally, the first point device cooperates with a second point to communicate with the user equipment, and
the sending unit 520 is specifically configured to send the frequency domain indication information to the second point device, for enabling the second point device to send the frequency domain indication information to the user equipment through a fourth carrier, wherein the first carrier is used for communication between the first point device and the user equipment, and the fourth carrier is used for communication between the second point device and the user equipment.

Optionally, the sending unit 520 is specifically configured to send the frequency domain indication information to the user equipment through a reserved resource in a synchronous channel.

Optionally, the sending unit 520 is specifically configured to send the frequency domain indication information to the user equipment through a radio resource control RRC signaling.

Optionally, the selecting unit 510 is specifically configured to enable the first point device to select the first frequency domain resource from the first carrier according to a cell identifier of the first point device, wherein the cell identifier of the first point device is different from a cell identifier of a neighboring point device of the first point device.

Optionally, before determining the first frequency domain resource used for bearing the first RS, the selecting unit 510 is specifically configured to acquire reference information, wherein the reference information is used for indicating the resource configuration of a second carrier used for bearing a second RS, wherein the second carrier is a carrier used by a neighboring point device or a neighboring cell of the first point device; and
configured to select the first frequency domain resource from the first carrier according to the reference information, for ensuring that the resource configuration of the first carrier and the second carrier in the same sub-frame is different.

Optionally, the first RS is generated according to a first root sequence and the second RS is generated according to a second root sequence; or
the first RS is generated according to a third root sequence and a first cyclic shift, and the second RS is generated according to the third root sequence and a second cyclic shift.

The apparatus for transmitting a reference signal in the embodiment of the present invention, after selecting the resource used for bearing the RS from the first carrier, configured to transmit the RS to the user equipment through the selected resource, to make the position of the resource used for bearing the RS in the first carrier be not fixed, so that the cost of the resource used for bearing the RS may be reduced and the resource used for bearing the RS may be configured flexibly.

The apparatus for transmitting a reference signal 500 according to the embodiment of the present invention may be corresponding to the first point device in the method in the embodiment of the present invention, moreover, the above-mentioned other operations and/or functions of the units and modules in the apparatus for transmitting a reference signal 500 are respectively used for implementing corresponding procedures of the method 100 in Fig. 1, and will not be redundantly herein.

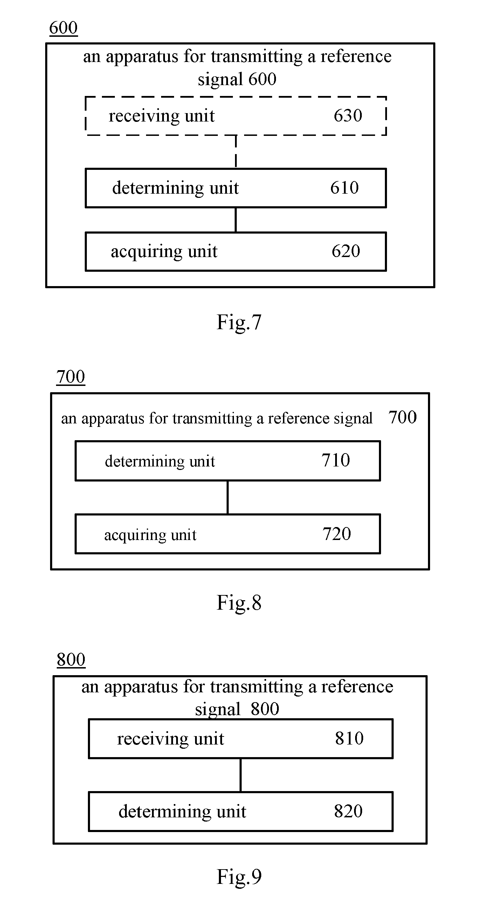

Fig. 7 shows a schematic flow diagram of an apparatus for transmitting a reference signal 600 according to an embodiment of the present invention. As shown in Fig. 7, the method 600 includes:
a determining unit 610, configured to determine a first frequency domain resource used for bearing a first reference signal RS from a first carrier, wherein the first frequency domain resource is selected by a first point device from the first carrier, the first carrier is used for data transmission and/or measurement between the first point device and a user equipment, and the number of resource units included in the first frequency domain resource is smaller than a system bandwidth of the first carrier; and
an acquiring unit 620, configured to acquire the first RS according to the first frequency domain resource determined by the determining unit 610.

Optionally, the first point device is a micro base station, an access point or a transmission point.

Optionally, the first carrier is a new carrier type NCT carrier or a carrier used for performing machine type communication MTC.

Optionally, the first point device is located in an idle cell.

Optionally, the first frequency domain resource is selected by the first point device from the first carrier according to a cell identifier of the first point device, and
the determining unit 610 is specifically configured to acquire the cell identifier of the first point device; and
configured to determine the first frequency domain resource according to the cell identifier of the first point device.

Optionally, the apparatus further includes:
a receiving unit 630, configured to receive frequency domain indication information used for indicating the first frequency domain resource;
the determining unit 610 is specifically configured to determine the first frequency domain resource according to the frequency domain indication information.

Optionally, the receiving unit is specifically configured to receive the frequency domain indication information through a third carrier, wherein:
when the first carrier is an NCT carrier, the third carrier is a main component carrier;
when the first carrier is a carrier used for performing MTC, the third carrier is a carrier located in the same preset frequency domain bandwidth as the first carrier.

Optionally, the first point device cooperates with a second point to communicate with the user equipment, and
the receiving unit 630 is specifically configured to receive the frequency domain indication information sent by the second point device through a fourth carrier, wherein the frequency domain indication information is acquired by the second point device from the first point device, the first carrier is used for communication between the first point device and the user equipment, and the fourth carrier is used for communication between the second point device and the user equipment.

Optionally, the receiving unit 630 is specifically configured to receive the frequency domain indication information sent by the first point device through a reserved resource in a synchronous channel.

Optionally, the receiving unit 630 is specifically configured to receive the frequency domain indication information sent by the first point device through a radio resource control RRC signaling.

The apparatus for transmitting a reference signal in the embodiment of the present invention, after selecting the resource used for bearing the RS from the first carrier, configured to transmit the RS to the user equipment through the selected resource, to make the position of the resource used for bearing the RS in the first carrier be not fixed, so that the cost of the resource used for bearing the RS may be reduced and the resource used for bearing the RS may be configured flexibly.

The apparatus for transmitting a reference signal 600 according to the embodiment of the present invention may be corresponding to the user equipment in the method in the embodiment of the present invention, moreover, the above-mentioned other operations and/or functions of the units and modules in the apparatus for transmitting a reference signal 600 are respectively used for implementing corresponding procedures of the method 200 in Fig. 2, and will not be redundantly herein.

Fig. 8 shows a schematic flow diagram of an apparatus for transmitting a reference signal 700 according to an embodiment of the present invention. As shown in Fig. 8, the method 700 includes:
a selecting unit 710, configured to, when a user equipment performs data transmission and/or measurement through a fifth carrier and a sixth carrier, enable a first point device to select a first time domain resource used for bearing a third reference signal RS from the fifth carrier, wherein the fifth carrier is used for data transmission and/or measurement between the user equipment and the first point device, the sixth carrier is used for resource scheduling, the third RS is sent periodically, and the sending period of the third RS is at least two sub-frames; and
a sending unit 720, configured to send time domain indication information, wherein the time domain indication information is used for indicating offset of the first time domain resource selected by the selecting unit 710 relative to a second time domain resource of the sixth carrier and the sending period of the third RS,
and configured to transmit the third RS to the user equipment through the first time domain resource.

Optionally, the fifth carrier is a new carrier type NCT carrier, and the sixth carrier is a main component carrier; or
the fifth carrier is a carrier used for performing MTC, and the sixth carrier is a carrier located in the same preset frequency domain bandwidth as the fifth carrier.

Optionally, the fifth carrier is used for communication between the first point device and the user equipment, the sixth carrier is used for communication between the third point device and the user equipment, wherein the third point device cooperates with the first point to communicate with the user equipment.

Optionally, the sending unit 720 is specifically configured to send the time domain indication information to the third point device, for enabling the third point device to send the time domain indication information to the user equipment through the sixth carrier.

Optionally, the sending unit 720 is specifically configured to send the time domain indication information to the user equipment through a reserved resource in a synchronous channel.

Optionally, the sending unit 720 is specifically configured to send the time domain indication information to the user equipment through a radio resource control RRC signaling.

The apparatus for transmitting a reference signal in the embodiment of the present invention, after selecting the resource used for bearing the RS from the first carrier, configured to transmit the RS to the user equipment through the selected resource, to make the position of the resource used for bearing the RS in the first carrier be not fixed, so that the cost of the resource used for bearing the RS may be reduced and the resource used for bearing the RS may be configured flexibly.

The apparatus for transmitting a reference signal 700 according to the embodiment of the present invention may be corresponding to the first point device in the method in the embodiment of the present invention, moreover, the above-mentioned other operations and/or functions of the units and modules in the apparatus for transmitting a reference signal 700 are respectively used for implementing corresponding procedures of the method 300 in Fig. 3, and will not be redundantly herein.

Fig. 9 shows a schematic flow diagram of an apparatus for transmitting a reference signal 800 according to an embodiment of the present invention. As shown in Fig. 9, the method 800 includes:
a receiving unit 810, configured to, when a user equipment performs data transmission and/or measurement through a fifth carrier and a sixth carrier, receive time domain indication information, wherein the fifth carrier is used for data transmission and/or measurement between the user equipment and a first point device, the sixth carrier is used for resource scheduling, the time domain indication information is used for indicating offset of a first time domain resource of the fifth carrier relative to a second time domain resource of the sixth carrier, the first time domain resource is used for bearing a third reference signal RS, the third RS is sent periodically, the sending period of the third RS is at least two sub-frames, and the time domain indication information is further used for indicating the sending period of the third RS; and
a determining unit 820, configured to determine the first time domain resource from the fifth carrier according to the time domain indication information, in order to acquire the third RS.

Optionally, the fifth carrier is a new carrier type NCT carrier, and the sixth carrier is a main component carrier; or
the fifth carrier is a carrier used for performing MTC, and the sixth carrier is a carrier located in the same preset frequency domain bandwidth as the fifth carrier.

Optionally, the fifth carrier is used for communication between the first point device and the user equipment, the sixth carrier is used for communication between the third point device and the user equipment, wherein the third point device cooperates with the first point to communicate with the user equipment.

Optionally, the receiving unit 810 is specifically configured to receive the time domain indication information sent by a third point device through the sixth carrier, wherein the time domain indication information is acquired by the third point device from the first point device.

Optionally, the receiving unit 810 is specifically configured to receive the time domain indication information sent by the first point device through a reserved resource in a synchronous channel.

Optionally, the receiving unit 810 is specifically configured to receive the time domain indication information sent by the first point device through a radio resource control RRC signaling.

The apparatus for transmitting a reference signal in the embodiment of the present invention, after selecting the resource used for bearing the RS from the first carrier, configured to transmit the RS to the user equipment through the selected resource, to make the position of the resource used for bearing the RS in the first carrier be not fixed, so that the cost of the resource used for bearing the RS may be reduced and the resource used for bearing the RS may be configured flexibly.

The apparatus for transmitting a reference signal 800 according to the embodiment of the present invention may be corresponding to the user equipment in the method in the embodiment of the present invention, moreover, the above-mentioned other operations and/or functions of the units and modules in the apparatus for transmitting a reference signal 800 are respectively used for implementing corresponding procedures of the method 400 in Fig. 5, and will not be redundantly herein.

It should be understood that in this paper, the term "and/or" merely describes an association relationship of associated objects and expresses that three relationships may exist. For example, A and/or B may express three conditions that A singly exists, A and B simultaneously exist and B singly exists. In addition, in this paper, the character "/" generally expresses an "or" relationship of front and back associated objects.

It should be understood that, in various embodiments of the present invention, the size of the serial numbers of the above-mentioned processes does not mean the execution order, the execution order of the processes should be determined by the functions and internal logics thereof, and should not constitute any limit to the implementation processes of the embodiments of the present invention.

Those of ordinary skills in the art may be aware that, units and algorithm steps of the examples described in the embodiments disclosed in this paper may be implemented by electronic hardware or a combination of computer software and the electronic hardware. Whether these functions are implemented in the form of hardware or software is determined by specific applications and design constraint conditions of the technical solutions. Those skilled may implement the described functions by using different methods for each specific application, but this implementation should not be considered beyond the scope of the present invention.

Those skilled in the art to which the present invention pertains may clearly understand that, for convenience and concision of description, the specific working processes of the system, apparatus and units described above may refer to corresponding processes in the foregoing method embodiments, and will not be repeated redundantly herein.

In the several embodiments provided in the present application, it should be understood that, the disclosed system, apparatus and method may be implemented in other manners. For example, the apparatus embodiments described above are merely exemplary, e.g., the division of the units is only a logic function division, other division manners may exist in practical implementation, for example, multiple units or components may be combined or integrated to another system, or some features may be omitted or not implemented. From another point of view, the displayed or discussed mutual coupling or direct coupling or communication connection may be indirect coupling or communication connection of devices or units through some interfaces, and may be in electrical, mechanical or other forms.

The units described as separate components may be separated physically or not, components displayed as units may be physical units or not, namely, may be located in one place, or may be distributed on multiple network units. A part of or all of the units may be selected to achieve the purposes of the technical solutions in the embodiments according to actual demand.

In addition, the functional units in the embodiments of the present invention may be integrated in a processing unit, or the units singly exist physically, or two or more units are integrated in one unit.

If the function is implemented in the form of a software functional unit and is sold or used as an independent product, it may be stored in a computer readable storage medium. Based on this understanding, the technical solutions of the present invention substantially, or the part contributing to the prior art, or a part of the technical solutions may be implemented in the form of a software product, the computer software product is stored in a storage medium, and includes multiple instructions enabling a computer device (may be a personnel computer, a server, or network device, etc.) to execute all or a part of the steps of the methods in the embodiments of the present invention. The foregoing storage medium includes a variety of media capable of storing program codes, such as a USB disk, a mobile hard disk, a read-only memory (ROM, Read-Only Memory), a random access memory (RAM, Random Access Memory), a magnetic disk, an optical disk or the like.

The foregoing descriptions are merely specific embodiments of the present invention, rather than limiting the protection scope of the present invention. Any skilled one who is familiar with this art could readily think of variations or substitutions within the disclosed technical scope of the present invention, and these variations or substitutions shall fall within the protection scope of the present invention. Accordingly, the protection scope of the claims should prevail over the protection scope of the present invention.

## Claims

1. A method for transmitting a reference signal, comprising:
selecting, by a first point device, a first frequency domain resource used for bearing a first reference signal RS from a first carrier, wherein the first carrier is used for data transmission and/or measurement between the first point device and a user equipment, and a number of a resource unit included in the first frequency domain resource is smaller than a system bandwidth of the first carrier; and
transmitting the first RS to the user equipment through the first frequency domain resource.

2. The method of claim 1, wherein the first point device is a micro base station, an access point or a transmission point.

3. The method of claim 1 or 2, wherein the first carrier is a new carrier type NCT carrier or a carrier used for performing machine type communication MTC.

4. The method of claim 1, wherein the first point device is located in an idle cell.

5. The method of any one of claims 1-4, wherein before the transmitting the first RS to the user equipment through the first frequency domain resource, the method further comprises:
sending frequency domain indication information used for indicating the first frequency domain resource, for enabling the user equipment to determine the first frequency domain resource from the first carrier according to the frequency domain indication information, in order to acquire the first RS.

6. The method of claim 5, wherein the sending frequency domain indication information used for indicating the first frequency domain resource, comprises:
sending the frequency domain indication information used for indicating the first frequency domain resource to the user equipment through a third carrier, wherein
when the first carrier is an NCT carrier, the third carrier is a main component carrier;
when the first carrier is a carrier used for performing MTC, the third carrier is a carrier located in the same preset frequency domain bandwidth as the first carrier.

7. The method of claim 5 or 6, wherein the first point device cooperates with a second point to communicate with the user equipment, and
the sending frequency domain indication information used for indicating the first frequency domain resource, comprises:
sending the frequency domain indication information to the second point device, for enabling the second point device to send the frequency domain indication information to the user equipment through a fourth carrier, wherein the first carrier is used for communication between the first point device and the user equipment, and the fourth carrier is used for communication between the second point device and the user equipment.

8. The method of any one of claims 5-7, wherein the sending frequency domain indication information used for indicating the first frequency domain resource, comprises:
sending the frequency domain indication information to the user equipment through a reserved resource in a synchronous channel.

9. The method of any one of claims 5-7, wherein the sending frequency domain indication information used for indicating the first frequency domain resource, comprises:
sending the frequency domain indication information to the user equipment through a radio resource control RRC signaling.

10. The method of any one of claims 1-9, wherein the selecting, by a first point device, a first frequency domain resource used for bearing a first reference signal RS from a first carrier, comprises:
selecting, by the first point device, the first frequency domain resource from the first carrier according to a cell identifier of the first point device, wherein the cell identifier of the first point device is different from a cell identifier of a neighboring point device of the first point device.

11. The method of any one of claims 1-10, wherein before the determining a first frequency domain resource used for bearing a first RS, the method further comprises:
acquiring reference information, wherein the reference information is used for indicating resource configuration of a second carrier used for bearing a second RS, and the second carrier is a carrier used by a neighboring point device of the first point device; and
the selecting, by the first point device, a first frequency domain resource used for bearing a first reference signal RS from a first carrier, comprises:
selecting, by the first point device, the first frequency domain resource from the first carrier according to the reference information, for ensuring that the resource configuration of the first carrier and the second carrier in the same sub-frame is diferent.

12. The method of claim 11, wherein the first RS is generated according to a first root sequence and the second RS is generated according to a second root sequence; or
the first RS is generated according to a third root sequence and a first cyclic shift, and the second RS is generated according to the third root sequence and a second cyclic shift.

13. A method for transmitting a reference signal, comprising:
determining a first frequency domain resource used for bearing a first reference signal RS from a first carrier, wherein the first frequency domain resource is selected by a first point device from the first carrier, the first carrier is used for data transmission and/or measurement between the first point device and a user equipment, and a number of a resource unit included in the first frequency domain resource is smaller than a system bandwidth of the first carrier; and
acquiring the first RS according to the first frequency domain resource.

14. The method of claim 13, wherein the first point device is a micro base station, an access point or a transmission point.

15. The method of claim 13 or 14, wherein the first carrier is a new carrier type NCT carrier or a carrier used for performing machine type communication MTC.

16. The method of claim 13, wherein the first point device is located in an idle cell.

17. The method of any one of claims 13-16, wherein the first frequency domain resource is selected by the first point device from the first carrier according to a cell identifier of the first point device, and
the determining a first frequency domain resource used for bearing a first RS from a first carrier, comprises:
acquiring the cell identifier of the first point device; and
determining the first frequency domain resource according to the cell identifier of the first point device.

18. The method of any one of claims 13-16, wherein the determining a first frequency domain resource used for bearing a first RS from a first carrier, comprises:
receiving frequency domain indication information used for indicating the first frequency domain resource; and
determining the first frequency domain resource according to the frequency domain indication information.

19. The method of claim 18, wherein the receiving frequency domain indication information used for indicating the first frequency domain resource, comprises:
receiving the frequency domain indication information through a third carrier, wherein:
when the first carrier is an NCT carrier, the third carrier is a main component carrier;
when the first carrier is a carrier used for performing MTC, the third carrier is a carrier located in the same preset frequency domain bandwidth as the first carrier.

20. The method of claim 18 or 19, wherein the first point device cooperates with a second point to communicate with the user equipment, and
the receiving frequency domain indication information used for indicating the first frequency domain resource, comprises:
receiving the frequency domain indication information sent by the second point device through a fourth carrier, wherein the frequency domain indication information is acquired by the second point device from the first point device, the first carrier is used for communication between the first point device and the user equipment, and the fourth carrier is used for communication between the second point device and the user equipment.

21. The method of any one of claims 18-20, wherein the receiving frequency domain indication information used for indicating the first frequency domain resource, comprises:
receiving the frequency domain indication information through a reserved resource in a synchronous channel.

22. The method of any one of claims 18-20, wherein the sending frequency domain indication information used for indicating the first frequency domain resource, comprises:
receiving the frequency domain indication information through a radio resource control RRC signaling.

23. A method for transmitting a reference signal, comprising:
when a user equipment performs data transmission and/or measurement through a fifth carrier and a sixth carrier, selecting, by a first point device, a first time domain resource used for bearing a third reference signal RS from the fifth carrier, wherein the fifth carrier is used for data transmission and/or measurement between the user equipment and the first point device, the sixth carrier is used for rescource scheduling, the third RS is sent periodically, and the sending period of the third RS is at least two sub-frames;
sending time domain indication information, wherein the time domain indication information is used for indicating offset of the first time domain resource relative to a second time domain resource of the sixth carrier and the sending period of the third RS; and
transmitting the third RS to the user equipment through the first time domain resource.

24. The method of claim 23, wherein the fifth carrier is a new carrier type NCT carrier, and the sixth carrier is a main component carrier; or
the fifth carrier is a carrier used for performing MTC, and the sixth carrier is a carrier located in the same preset frequency domain bandwidth as the fifth carrier.

25. The method of claim 23 or 24, wherein the fifth carrier is used for communication between the first point device and the user equipment, the sixth carrier is used for communication between the third point device and the user equipment, wherein the third point device cooperates with the first point to communicate with the user equipment.

26. The method of claim 25, wherein the sending time domain indication information, comprises:
sending the time domain indication information to the third point device, for enabling the third point device to send the time domain indication information to the user equipment through the sixth carrier.

27. The method of any one of claims 23-26, wherein the sending time domain indication information, comprises:
sending the time domain indication information to the user equipment through a reserved resource in a synchronous channel.

28. The method of any one of claims 23-26, wherein the sending time domain indication information, comprises:
sending the time domain indication information to the user equipment through a radio resource control RRC signaling.

29. A method for transmitting a reference signal, comprising:
when a user equipment performs data transmission and/or measurement through a fifth carrier and a sixth carrier, receiving time domain indication information, wherein the fifth carrier is used for data transmission and/or measurement between the user equipment and a first point device, the sixth carrier is used for resourcescheduling, the time domain indication information is used for indicating offset of a first time domain resource of the fifth carrier relative to a second time domain resource of the sixth carrier, the first time domain resource is used for bearing a third reference signal RS, the third RS is sent periodically, the sending period of the third RS is at least two sub-frames, and the time domain indication information is further used for indicating the sending period of the third RS; and
determining the first time domain resource from the fifth carrier according to the time domain indication information, in order to acquire the third RS.

30. The method of claim 29, wherein the fifth carrier is a new carrier type NCT carrier, and the sixth carrier is a main component carrier; or
the fifth carrier is a carrier used for performing MTC, and the sixth carrier is a carrier located in the same preset frequency domain bandwidth as the fifth carrier.

31. The method of claim 29 or 30, wherein the fifth carrier is used for communication between the first point device and the user equipment, the sixth carrier is used for communication between the third point device and the user equipment, wherein the third point device cooperates with the first point to communicate with the user equipment.

32. The method of claim 31, wherein the receiving time domain indication information, comprises:
receiving the time domain indication information sent by the third point device through the sixth carrier, wherein the time domain indication information is acquired by the third point device from the first point device.

33. The method of any one of claims 29-31, wherein the receiving time domain indication information, comprises:
receiving the time domain indication information through a reserved resource in a synchronous channel.

34. The method of any one of claims 29-31, wherein the receiving time domain indication information, comprises:
receiving the time domain indication information through a radio resource control RRC signaling.

35. An apparatus for transmitting a reference signal, comprising:
a selecting unit, configured to enable a first point device to select a first frequency domain resource used for bearing a first reference signal RS from a first carrier, wherein the first carrier is used for data transmission and/or measurement between the first point device and a user equipment, and a number of a resource unit included in the first frequency domain resource is smaller than a system bandwidth of the first carrier; and
a sending unit, configured to transmit the first RS to the user equipment through the first frequency domain resource selected by the selecting unit.

36. The apparatus of claim 35, wherein the first point device is a micro base station, an access point or a transmission point.

37. The apparatus of claim 35 or 36, wherein the first carrier is a new carrier type NCT carrier or a carrier used for performing machine type communication MTC.

38. The apparatus of claim 35, wherein the first point device is located in an idle cell.

39. The apparatus of any one of claims 35-38, wherein the sending unit is further configured to send frequency domain indication information used for indicating the first frequency domain resource, for enabling the user equipment to determine the first frequency domain resource from the first carrier according to the frequency domain indication information, in order to acquire the first RS.

40. The apparatus of claim 39, wherein the sending unit is specifically configured to send the frequency domain indication information used for indicating the first frequency domain resource to the user equipment through a third carrier, wherein
when the first carrier is an NCT carrier, the third carrier is a main component carrier;
when the first carrier is a carrier used for performing MTC, the third carrier is a carrier located in the same preset frequency domain bandwidth as the first carrier.

41. The apparatus of claim 39 or 40, wherein the first point device cooperates with a second point to communicate with the user equipment, and
the sending unit is specifically configured to send the frequency domain indication information to the second point device, for enabling the second point device to send the frequency domain indication information to the user equipment through a fourth carrier, wherein the first carrier is used for communication between the first point device and the user equipment, and the fourth carrier is used for communication between the second point device and the user equipment.

42. The apparatus of claim 39, wherein the sending unit is specifically configured to send the frequency domain indication information to the user equipment through a reserved resource in a synchronous channel.

43. The apparatus of claim 39, wherein the sending unit is specifically configured to send the frequency domain indication information to the user equipment through a radio resource control RRC signaling.

44. The apparatus of any one of claims 35-43, wherein the selecting unit is specifically configured to enable the first point device to select the first frequency domain resource from the first carrier according to a cell identifier of the first point device, wherein the cell identifier of the first point device is different from a cell identifier of a neighboring point device of the first point device.

45. The apparatus of any one of claims 35-44, wherein before determining the first frequency domain resource used for bearing the first RS, the selecting unit is specifically configured to acquire reference information, wherein the reference information is used for indicating resource configuration of a second carrier used for bearing a second RS, and the second carrier is a carrier used by a neighboring point device of the first point device; and
select the first frequency domain resource from the first carrier according to the reference information, for ensuring that the resource configuration of the first carrier and the second carrier in the same sub-frame is diferent.

46. The apparatus of claim 45, wherein the first RS is generated according to a first root sequence and the second RS is generated according to a second root sequence; or
the first RS is generated according to a third root sequence and a first cyclic shift, and the second RS is generated according to the third root sequence and a second cyclic shift.

47. An apparatus for transmitting a reference signal, comprising:
a determining unit, configured to determine a first frequency domain resource used for bearing a first reference signal RS from a first carrier, wherein the first frequency domain resource is selected by a first point device from the first carrier, the first carrier is used for data transmission and/or measurement between the first point device and a user equipment, and a number of a resource unit included in the first frequency domain resource is smaller than a system bandwidth of the first carrier; and
an acquiring unit, configured to acquire the first RS according to the first frequency domain resource determined by the determining unit.

48. The apparatus of claim 47, wherein the first point device is a micro base station, an access point or a transmission point.

49. The apparatus of claim 47 or 48, wherein the first carrier is a new carrier type NCT carrier or a carrier used for performing machine type communication MTC.

50. The apparatus of claim 47, wherein the first point device is located in an idle cell.

51. The apparatus of any one of claims 47-50, wherein the first frequency domain resource is selected by the first point device from the first carrier according to a cell identifier of the first point device, and
the determining unit is specifically configured to acquire the cell identifier of the first point device, and
determine the first frequency domain resource according to the cell identifier of the first point device.

52. The apparatus of any one of claims 47-50, further comprising:
a receiving unit, configured to receive frequency domain indication information used for indicating the first frequency domain resource; and
the determining unit is specifically configured to determine the first frequency domain resource according to the frequency domain indication information.

53. The apparatus of claim 52, wherein the receiving unit is specifically configured to receive the frequency domain indication information through a third carrier, wherein:
when the first carrier is an NCT carrier, the third carrier is a main component carrier;
when the first carrier is a carrier used for performing MTC, the third carrier is a carrier located in the same preset frequency domain bandwidth as the first carrier.

54. The apparatus of claim 52 or 53, wherein the first point device cooperates with a second point to communicate with the user equipment, and
the receiving unit is specifically configured to receive the frequency domain indication information sent by the second point device through a fourth carrier, wherein the frequency domain indication information is acquired by the second point device from the first point device, the first carrier is used for communication between the first point device and the user equipment, and the fourth carrier is used for communication between the second point device and the user equipment.

55. The apparatus of claim 52, wherein the receiving unit is specifically configured to receive the frequency domain indication information through a reserved resource in a synchronous channel.

56. The apparatus of claim 52, wherein the receiving unit is specifically configured to receive the frequency domain indication information through a radio resource control RRC signaling.

57. An apparatus for transmitting a reference signal, comprising:
a selecting unit, configured to, when a user equipment performs data transmission and/or measurement through a fifth carrier and a sixth carrier, enable a first point device to select a first time domain resource used for bearing a third reference signal RS from the fifth carrier, wherein the fifth carrier is used for data transmission and/or measurement between the user equipment and the first point device, the sixth carrier is used for resourcescheduling, the third RS is sent periodically, and the sending period of the third RS is at least two sub-frames; and
a sending unit, configured to send time domain indication information, wherein the time domain indication information is used for indicating offset of the first time domain resource selected by the selecting unit relative to a second time domain resource of the sixth carrier and the sending period of the third RS, and
transmit the third RS to the user equipment through the first time domain resource.

58. The apparatus of claim 57, wherein the fifth carrier is a new carrier type NCT carrier, and the sixth carrier is a main component carrier; or
the fifth carrier is a carrier used for performing MTC, and the sixth carrier is a carrier located in the same preset frequency domain bandwidth as the fifth carrier.

59. The apparatus of claim 57 or 58, wherein the fifth carrier is used for communication between the first point device and the user equipment, the sixth carrier is used for communication between the third point device and the user equipment, wherein the third point device cooperates with the first point to communicate with the user equipment.

60. The apparatus of claim 59, wherein the sending unit is specifically configured to send the time domain indication information to the third point device, for enabling the third point device to send the time domain indication information to the user equipment through the sixth carrier.

61. The apparatus of any one of claims 57-59, wherein the sending unit is specifically configured to send the time domain indication information to the user equipment through a reserved resource in a synchronous channel.

62. The apparatus of any one of claims 57-59, wherein the sending unit is specifically configured to send the time domain indication information to the user equipment through a radio resource control RRC signaling.

63. An apparatus for transmitting a reference signal, comprising:
a receiving unit, configured to, when a user equipment performs data transmission and/or measurement through a fifth carrier and a sixth carrier, receive time domain indication information, wherein the fifth carrier is used for data transmission and/or measurement between the user equipment and a first point device, the sixth carrier is used for resourcescheduling, the time domain indication information is used for indicating offset of a first time domain resource of the fifth carrier relative to a second time domain resource of the sixth carrier, the first time domain resource is used for bearing a third reference signal RS, the third RS is sent periodically, the sending period of the third RS is at least two sub-frames, and the time domain indication information is further used for indicating the sending period of the third RS; and
a determining unit, configured to determine the first time domain resource from the fifth carrier according to the time domain indication information, in order to acquire the third RS.

64. The apparatus of claim 63, wherein the fifth carrier is a new carrier type NCT carrier, and the sixth carrier is a main component carrier; or
the fifth carrier is a carrier used for performing MTC, and the sixth carrier is a carrier located in the same preset frequency domain bandwidth as the fifth carrier.

65. The apparatus of claim 63 or 64, wherein the fifth carrier is used for communication between the first point device and the user equipment, the sixth carrier is used for communication between a third point device and the user equipment, wherein the third point device cooperates with the first point to communicate with the user equipment.

66. The apparatus of claim 65, wherein the receiving unit is specifically configured to receive the time domain indication information sent by the third point device through the sixth carrier, wherein the time domain indication information is acquired by the third point device from the first point device.

67. The apparatus of any one of claims 63-65, wherein the receiving unit is specifically configured to receive the time domain indication information through a reserved resource in a synchronous channel.

68. The apparatus of any one of claims 63-65, wherein the receiving unit is specifically configured to receive the time domain indication information through a radio resource control RRC signaling.
